(19) Europäisches Patentamt
European Patent Office
Office européen des brevets

(11) EP 1 265 956 B1

(12) **FASCICULE DE BREVET EUROPEEN**

(45) Date de publication et mention de la délivrance du brevet:
**22.10.2003 Bulletin 2003/43**

(21) Numéro de dépôt: **00993720.2**

(22) Date de dépôt: **27.12.2000**

(51) Int Cl.⁷: **C08K 5/5425**, C08K 5/54, C08L 21/00

(86) Numéro de dépôt international:
**PCT/EP00/13291**

(87) Numéro de publication internationale:
**WO 01/049781 (12.07.2001 Gazette 2001/28)**

(54) **COMPOSITION DE CAOUTCHOUC POUR PNEUMATIQUE COMPORTANT UN AGENT DE COUPLAGE (CHARGE BLANCHE/ELASTOMERE DIENIQUE) ACTIVE PAR UN INITIATEUR RADICALAIRE A AMOR AGE THERMIQUE**

KAUTSCHUKZUSAMMENSETZUNG FÜR REIFEN MIT EINEM KUPPLUNGSMITTEL (WESISER FÜLLSTOFF/DIENELASTOMER), DAS DURCH EINEN THERMISCH INITIERBAREN RADIKALSTARTER AKTIVIERT WIRD

RUBBER COMPOSITION FOR A TYRE, COMPRISING A COUPLING AGENT (WHITE FILLER/DIENIC ELASTOMER) ACTIVATED BY A HEAT-INITIATED RADICAL STARTER

(84) Etats contractants désignés:
**AT BE CH CY DE DK ES FI FR GB GR IE IT LI LU MC NL PT SE TR**

(30) Priorité: **30.12.1999 FR 9916843**

(43) Date de publication de la demande:
**18.12.2002 Bulletin 2002/51**

(73) Titulaires:
- **Sociéte de Technologie Michelin**
  **63000 Clermont-Ferrand Cedex 09 (FR)**
- **Michelin Recherche et Technique S.A.**
  **1763 Granges-Paccot (CH)**

(72) Inventeurs:
- **MANGERET, Jean-Luc**
  **F-63200 Riom (FR)**
- **TARDIVAT, Jean-Claude**
  **F-63000 Clermont-Ferrand (FR)**

(74) Mandataire: **Ribière, Joel**
**Michelin & Cie**
**Service SGD/LG/PI-LAD**
**63040 Clermont-Ferrand Cedex 09 (FR)**

(56) Documents cités:
**DE-A- 4 319 142** **US-A- 3 664 403**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 265 956 B1

Printed by Jouve, 75001 PARIS (FR)

## Description

La présente invention se rapporte aux compositions de caoutchoucs diéniques renforcées d'une charge blanche, destinées particulièrement à la fabrication de pneumatiques ou de produits semi-finis pour pneumatiques, en particulier aux bandes de roulement de ces pneumatiques.

Depuis que les économies de carburant et la nécessité de protéger l'environnement sont devenues une priorité, il est souhaitable de produire des élastomères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution de pneumatiques tels que par exemple des sous-couches, des gommes de calandrage ou de flancs ou des bandes de roulement et obtenir des pneumatiques aux propriétés améliorées, possédant notamment une résistance au roulement réduite.

Pour atteindre un tel objectif de nombreuses solutions ont été proposées, tout d'abord essentiellement concentrées sur l'utilisation d'élastomères modifiés au moyen d'agents tels que des agents de couplage, d'étoilage ou de fonctionnalisation, avec du noir de carbone comme charge renforçante dans le but d'obtenir une bonne interaction entre l'élastomère modifié et le noir de carbone. On sait en effet, d'une manière générale, que pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans l'élastomère.

De manière tout à fait connue, le noir de carbone présente de telles aptitudes, ce qui n'est en général pas le cas des charges blanches. Pour des raisons d'affinités réciproques, les particules de charge blanche ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge blanche/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processabilité") plus difficile qu'en présence de noir de carbone.

L'intérêt pour les compositions de caoutchouc renforcées de charge blanche a été cependant fortement relancé avec la publication de la demande de brevet européen EP-A-0 501 227 qui divulgue une composition de caoutchouc diénique vulcanisable au soufre, renforcée d'une silice précipitée particulière du type hautement dispersible, qui permet de fabriquer un pneumatique ou une bande de roulement ayant une résistance au roulement nettement améliorée, sans affecter les autres propriétés en particulier celles d'adhérence, d'endurance et de résistance à l'usure.

La demande de brevet européen EP-A-0 810 258 divulgue quant à elle une composition de caoutchouc diénique renforcée d'une autre charge blanche particulière, en l'occurrence une alumine ($Al_2O_3$) spécifique à dispersibilité élevée, qui permet elle aussi l'obtention de pneumatiques ou de bandes de roulement ayant un tel excellent compromis de propriétés contradictoires.

L'utilisation de ces silices ou alumines spécifiques, hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la connexion entre la surface des particules de charge blanche et l'élastomère, tout en facilitant la dispersion de cette charge blanche au sein de la matrice élastomérique.

Par agent de "couplage" (charge blanche/élastomère), on entend de manière connue un agent apte à établir une connexion suffisante, de nature chimique et/ou physique, entre la charge blanche et l'élastomère diénique ; un tel agent de couplage, au moins bifonctionnel, a par exemple comme formule générale simplifiée « Y-A-X », dans laquelle:

- Y représente un groupe fonctionnel (fonction "Y") qui est capable de se lier physiquement et/ou chimiquement à la charge blanche, une telle liaison pouvant être établie, par exemple, entre un atome de silicium de l'agent de couplage et les groupes hydroxyle (OH) de surface de la charge blanche (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- A représente un groupe hydrocarboné permettant de relier Y et X.

Les agents de couplage ne doivent en particulier pas être confondus avec de simples agents de recouvrement de charge blanche qui de manière connue peuvent comporter la fonction Y active vis-à-vis de la charge blanche mais

sont dépourvus de la fonction X active vis-à-vis de l'élastomère diénique.

Des agents de couplage, notamment (silice/élastomère diénique), ont été décrits dans un grand nombre de documents, les plus connus étant des alkoxysilanes bifonctionnels.

Ainsi il a été proposé dans la demande de brevet FR-A-2 094 859 d'utiliser un mercaptosilane pour la fabrication de bandes de roulement de pneumatiques. Il fut rapidement mis en évidence et il est aujourd'hui bien connu que les mercaptosilanes, et en particulier le γ-mercaptopropyltriméthoxysilane ou le γ-mercaptopropyltriéthoxysilane, sont susceptibles de procurer d'excellentes propriétés de couplage silice/élastomère, mais que l'utilisation industrielle de ces agents de couplage n'est pas possible en raison de la forte réactivité des fonctions -SH conduisant très rapidement au cours de la préparation de la composition de caoutchouc dans un mélangeur interne à des vulcanisations prématurées, appelées encore "grillage" ("scorching"), à des plasticités Mooney très élevées, en fin de compte à des compositions de caoutchouc quasiment impossibles à travailler et à mettre en oeuvre industriellement. Pour illustrer cette impossibilité d'utiliser industriellement de tels agents de couplage et les compositions de caoutchouc les contenant, on peut citer les documents FR-A-2 206 330, US-A-4 002 594.

Pour remédier à cet inconvénient, il a été proposé de remplacer ces mercaptosilanes par des alkoxysilanes polysulfurés, notamment des polysulfures de bis-trialkoxyl($C_1$-$C_4$)silylpropyle tels que décrits dans de nombreux brevets ou demandes de brevet (voir par exemple FR-A-2 206 330, US-A-3 842 111, US-A-3 873 489, US-A-3 978 103, US-A-3 997 581). Parmi ces polysulfures, on citera notamment le tétrasulfure de bis 3-triéthoxysilylpropyle (en abrégé TESPT) qui est généralement considéré aujourd'hui comme le produit apportant, pour des vulcanisats chargés à la silice, le meilleur compromis en terme de sécurité au grillage, de facilité de mise en oeuvre et de pouvoir renforçant, mais dont l'inconvénient connu est d'être fort onéreux (voir par exemple brevets US-A-5 652 310, US-A-5 684 171, US-A-5 684 172).

La Demanderesse a découvert lors de ses recherches que, de manière inattendue, des agents de couplage porteurs d'une double liaison éthylénique activée peuvent présenter des performances de couplage supérieures à celles des alkoxysilanes polysulfurés, notamment à celles du TESPT, lorsqu'on leur associe en très faible quantité un initiateur radicalaire du type à amorçage thermique. L'association de ces deux types de composés évite par ailleurs les problèmes de grillage prématuré et ceux de mise en oeuvre liés à une viscosité trop importante des compositions de caoutchouc à l'état cru, propres notamment aux mercaptosilanes.

En conséquence, un premier objet de l'invention concerne une composition de caoutchouc vulcanisable au soufre et utilisable pour la fabrication de pneumatiques, à base d'au moins:

(A) - un élastomère diénique choisi dans le groupe constitué par les polybutadiènes, le caoutchouc naturel, les polyisoprènes de synthèse, les copolymères de butadiène, les copolymères d'isoprène et les mélanges de ces élastomères (ci-après noté composant A);

(B) - une charge blanche renforçante (ci-après noté composant B);

(C) - un agent de couplage (charge blanche/élastomère diénique) porteur d'au moins une double liaison éthylénique activée (ci-après noté composant C), auquel est associé :

(D) - entre 0,05 et 1 pce (parties en poids pour cent d'élastomère) d'un initiateur radicalaire à amorçage thermique (ci-après noté composant D).

L'invention a également pour objet l'utilisation d'une composition de caoutchouc conforme à l'invention pour la fabrication de pneumatiques ou pour la fabrication de produits semi-finis destinés à de tels pneumatiques, ces produits semi-finis étant choisis en particulier dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

L'invention a également pour objet ces pneumatiques et ces produits semi-finis eux-mêmes, lorsqu'ils comportent une composition de caoutchouc conforme à l'invention.

L'invention concerne en particulier les bandes de roulement de pneumatiques, ces bandes de roulement pouvant être utilisées lors de la fabrication de pneumatiques neufs ou pour le rechapage de pneumatiques usagés ; grâce aux compositions de l'invention, ces bandes de roulement présentent à la fois une faible résistance au roulement et une résistance élevée à l'usure.

L'invention concerne également un procédé de préparation d'une composition de caoutchouc utilisable pour la fabrication de pneumatiques, ce procédé étant caractérisé en ce qu'on incorpore à au moins (i) un élastomère diénique choisi dans le groupe constitué par les polybutadiènes, le caoutchouc naturel, les polyisoprènes de synthèse, les copolymères de butadiène, les copolymères d'isoprène et les mélanges de ces élastomères (composant A), au moins:

(ii) - une charge blanche à titre de charge renforçante (composant B);

(iii) - un agent de couplage (charge blanche/élastomère diénique) porteur d'au moins une double liaison éthylénique

activée (composant C), auquel est associé :

(iv) - entre 0,05 et 1 pce (parties en poids pour cent d'élastomère) d'un initiateur radicalaire à amorçage thermique (composant D),

et en ce qu'on malaxe thermomécaniquement le tout, en une ou plusieurs étapes, jusqu'à atteindre une température maximale comprise entre 110°C et 190°C.

L'invention a d'autre part pour objet l'utilisation d'un initiateur radicalaire à amorçage thermique comme activateur de couplage (charge blanche/élastomère diénique) d'un agent de couplage à double liaison éthylénique activée, dans une composition de caoutchouc à base d'élastomère diénique renforcée d'une charge blanche, ledit élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

L'invention a enfin pour objet un procédé pour activer, dans une composition de caoutchouc vulcanisable au soufre à base d'élastomère diénique et renforcée d'une charge blanche, la fonction de couplage (charge blanche/élastomère diénique) d'un agent de couplage à double liaison éthylénique activée, ce procédé étant caractérisé en ce qu'on incorpore par malaxage à au moins (i) un élastomère diénique choisi dans le groupe constitué les polybutadiènes, le caoutchouc naturel, les polyisoprènes de synthèse, les copolymères de butadiène, les copolymères d'isoprène et les mélanges de ces élastomères (composant A), au moins:

(ii) - une charge blanche à titre de charge renforçante (composant B);

(iii) - un agent de couplage (charge blanche/élastomère diénique) porteur d'au moins une double liaison éthylénique activée (composant C), auquel est associé :

(iv) - entre 0,05 et 1 pce (parties en poids pour cent d'élastomère) d'un initiateur radicalaire à amorçage thermique (composant D),

et en ce qu'on malaxe thermomécaniquement le tout, en une ou plusieurs étapes, jusqu'à atteindre une température maximale comprise entre 110°C et 190°C.

L'invention ainsi que ses avantages seront aisément compris à la lumière de la description et des exemples de réalisation qui suivent, ainsi que des figures relatives à ces exemples qui représentent des courbes de variation de module en fonction de l'allongement pour différentes compositions de caoutchouc diénique, conformes ou non à l'invention.

## I. MESURES ET TESTS UTILISES

Les compositions de caoutchouc sont caractérisées avant et après cuisson, comme indiqué ci-après.

### I-1. Plasticité Mooney

On utilise un consistomètre oscillant tel que décrit dans la norme AFNOR-NFT-43005 (Novembre 1980). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### I-2. Temps de grillage

Les mesures sont effectuées à 130°C, conformément à la norme AFNOR-NFT-43004 (Novembre 1980). L'évolution de l'indice consistométrique en fonction du temps permet de déterminer le temps de grillage des compositions de caoutchouc, apprécié conformément à la norme précitée par le paramètre T5, exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Essais de traction

Ces essais permettent de déterminer les contraintes d'élasticité et les propriétés à la rupture. Sauf indication différente, ils sont effectués conformément à la norme AFNOR-NFT-46002 de septembre 1988. On mesure en seconde élongation (i.e. après un cycle d'accommodation) les modules sécants nominaux (en MPa) à 10% d'allongement (M10), 100% d'allongement (M100) et 300% d'allongement (M300). On mesure également les contraintes à la rupture (en MPa) et les allongements à la rupture (en %). Toutes ces mesures de traction sont effectuées dans les conditions

normales de température et d'hygrométrie selon la norme AFNOR-NFT-40101 (décembre 1979).

Un traitement des enregistrements de traction permet également de tracer la courbe de module en fonction de l'allongement (voir figures 1-3 annexées), le module utilisé ici étant le module sécant vrai mesuré en première élongation, calculé en se ramenant à la section réelle de l'éprouvette et non à la section initiale comme précédemment pour les modules nominaux.

I-4. Pertes hystérétiques

Les pertes hystérétiques (notées PH) sont mesurées par rebond à 60°C au 6ème choc, et exprimées en % selon la relation suivante:

$$PH\ (\%) = 100\ [(W_0-W_1)/W_0],$$

avec $W_0$ : énergie fournie ; $W_1$ : énergie restituée.

I-5. Propriétés dynamiques

Les propriétés dynamiques, notées $\Delta G^*$ et $\tan(\delta)_{max}$, mesurées en fonction de la déformation, sont effectuées à 10 Hertz avec une déformation crête-crête allant de 0,15% à 50%. La non-linéarité $\Delta G^*$ est la différence de module de cisaillement entre 0,15% et 50% de déformation, exprimée en MPa. L'hystérèse est exprimée par la mesure de tan $(\delta)_{max}$ qui correspond au maximum de tan(δ).

**II. CONDITIONS DE REALISATION DE L'INVENTION**

Les compositions de caoutchouc selon l'invention sont à base d'au moins chacun des constituants suivants : (i) au moins un élastomère diénique (composant A), (ii) au moins une charge blanche à titre de charge renforçante (composant B), (iii) au moins un agent de couplage porteur d'au moins une double liaison éthylénique activée (composant C) en tant qu'agent de couplage (charge blanche/élastomère diénique), auquel est associé (iv) au moins un initiateur radicalaire (composant D) à amorçage thermique, en tant qu'activateur de couplage.

Bien entendu, par l'expression composition "à base de", il faut entendre une composition comportant le mélange et/ou le produit de réaction *in situ* des composés précités (constituants A, B, C et D), certains de ces composés étant susceptibles de, ou destinés à réagir entre eux, au moins partiellement, lors des différentes phases de fabrication de la composition, notamment au cours de sa vulcanisation.

II-1. Elastomère diénique (composant A)

Par élastomère ou caoutchouc "diénique", on entend de manière connue un élastomère issu au moins en partie (i.e. un homopolymère ou un copolymère) de monomères diènes c'est-à-dire de monomères porteurs de deux doubles liaisons carbone-carbone, conjuguées ou non.

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, l'élastomère diénique de la composition conforme à l'invention (composant A) est choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères.

Parmi les polybutadiènes, conviennent en particulier ceux ayant une teneur en unités -1,2 comprise entre 4% et 80% ou ceux ayant une teneur en cis-1,4 supérieure à 80%. Parmi les polyisoprènes de synthèse, conviennent en particulier les cis-1,4-polyisoprènes.

Parmi les copolymères de butadiène ou d'isoprène, on entend en particulier les copolymères obtenus par copolymérisation d'au moins l'un de ces deux monomères avec un ou plusieurs composés vinyle-aromatique ayant de 8 à 20 atomes de carbone. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Les copolymères peuvent contenir entre

99% et 20% en poids d'unités diéniques et entre 1% et 80% en poids d'unités vinyle-aromatiques.

Parmi les copolymères de butadiène, on citera notamment les copolymères de butadiène-styrène (dits "SBR"), les copolymères de butadiène-isoprène (BIR), de butadiène-styrène-isoprène (SBIR). Parmi les copolymères d'isoprène, on citera notamment les copolymères d'isobutène-isoprène (caoutchouc butyle - IIR), d'isoprène-styrène (SIR), ainsi que les copolymères d'isoprène-butadiène (BIR) ou d'isoprène-butadiène-styrène (SBIR) précités.

Parmi les copolymères de butadiène-styrène, conviennent en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%. Parmi les copolymères de butadiène-isoprène, conviennent notamment ceux ayant une teneur en isoprène comprise entre 5% et 90% en poids et une température de transition vitreuse (Tg) de -40°C à -80°C. Quant aux copolymères isoprène-styrène, conviennent notamment ceux ayant une teneur en styrène comprise entre 5% et 50% en poids et une Tg comprise entre -25°C et -50°C. Dans le cas des copolymères de butadiène-styrène-isoprène, conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, à titre de composant A, convient particulièrement un élastomère diénique choisi dans le groupe des élastomères diéniques fortement insaturés constitué par les polybutadiènes, le caoutchouc naturel, les polyisoprènes de synthèse, les copolymères de butadiène-styrène, les copolymères de butadiène-isoprène, les copolymères d'isoprène-styrène, les copolymères de butadiène-styrène-isoprène et les mélanges de ces copolymères.

L'élastomère diénique choisi peut avoir toute microstructure qui est fonction des conditions de polymérisation utilisées, notamment de la présence ou non d'un agent modifiant et/ou randomisant et des quantités d'agent modifiant et/ou randomisant employées. Il peut être par exemple à blocs, statistique, séquencé, microséquencé, et être préparé en dispersion ou en solution ; il peut être couplé et/ou étoilé ou encore fonctionnalisé avec un agent de couplage et/ou d'étoilage ou de fonctionnalisation.

La composition conforme à l'invention est particulièrement destinée à une bande de roulement pour pneumatique, qu'il s'agisse d'un pneumatique neuf ou usagé (rechapage).

Dans le cas d'un pneumatique pour véhicule tourisme, le composant A est par exemple un SBR ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, ce copolymère SBR, de préférence préparé en solution, étant éventuellement utilisé en mélange avec un polybutadiène (BR) possédant de préférence plus de 90% de liaisons cis-1,4.

Dans le cas d'un pneumatique pour véhicule utilitaire, notamment pour véhicule "Poids-lourd" - i.e., métro, bus, engins de transport routier (camions, tracteurs, remorques), véhicules hors-la-route -, le composant A est par exemple choisi dans le groupe constitué par le caoutchouc naturel, les polyisoprènes de synthèse, les copolymères d'isoprène (isoprène-butadiène, isoprène-styrène, butadiène-styrène-isoprène) ou un mélange de deux ou plus de ces composés. Bien entendu, le composant A peut être aussi constitué, en tout ou partie, d'un autre élastomère fortement insaturé tel que, par exemple, un élastomère SBR.

L'amélioration du couplage apportée par l'invention est particulièrement notable sur des compositions à base de caoutchouc naturel ou de polyisoprène de synthèse. On entend par là des compositions de caoutchouc dans lesquelles l'élastomère diénique (composant A) est constitué majoritairement (i.e., à plus de 50% en poids) de caoutchouc naturel, de polyisoprène de synthèse ou d'un mélange de ces composés.

Avantageusement, le composant A peut être constitué exclusivement de caoutchouc naturel, de polyisoprène de synthèse ou d'un mélange de ces composés.

Bien entendu les compositions de l'invention pourraient contenir, en plus du composant A précédemment défini, des élastomères diéniques autres que le composant A, des élastomères non diéniques, voire des polymères autres que des élastomères, par exemple des polymères thermoplastiques.

II-2. Charge renforçante (composant B)

La charge blanche utilisée à titre de charge renforçante peut constituer la totalité ou une partie seulement de la charge renforçante totale, dans ce dernier cas associée par exemple à du noir de carbone.

De préférence, dans les compositions de caoutchouc conformes à l'invention, la charge blanche renforçante constitue la majorité, i.e. plus de 50 % en poids de la charge renforçante totale, plus préférentiellement plus de 80 %

en poids de cette charge renforçante totale.

Dans la présente demande, on entend par "charge blanche renforçante" une charge "blanche" (i.e., inorganique ou minérale), quelle que soit sa couleur (par opposition au noir de carbone), parfois aussi appelée charge "claire", capable de renforcer à elle seule, sans autre moyen qu'un système de couplage intermédiaire, une composition de caoutchouc destinée à la fabrication de pneumatiques, en d'autres termes capable de remplacer dans sa fonction de renforcement une charge conventionnelle de noir de carbone de grade pneumatique.

Préférentiellement, la charge blanche renforçante est une charge minérale du type silice ($SiO_2$) ou alumine ($Al_2O_3$), ou un mélange de ces deux charges.

La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. Les silices précipitées hautement dispersibles (dites "HD") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'alumine renforçante utilisée préférentiellement est une alumine hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm, telle que décrite dans la demande EP-A-0 810 258 précitée. Comme exemples non limitatifs de telles alumines renforçantes, on peut citer notamment les alumines A125, CR125, D65CR de la société Baïkowski.

L'état physique sous lequel se présente la charge blanche renforçante est indifférent, que ce soit sous forme de poudre, de microperles, de granulés, ou encore de billes. Bien entendu on entend également par charge blanche renforçante des mélanges de différentes charges blanches renforçantes, en particulier de silices et/ou d'alumines hautement dispersibles telles que décrites ci-dessus.

Lorsque les compositions de caoutchouc de l'invention sont utilisées comme bandes de roulement de pneumatiques, la charge blanche renforçante utilisée, en particulier s'il s'agit de silice, a de préférence une surface BET comprise entre 60 et 250 $m^2/g$, plus préférentiellement comprise entre 80 et 200 $m^2/g$.

La charge blanche renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneus et particulièrement dans les bandes de roulement des pneus. A titre d'exemples non limitatifs de tels noirs, on peut citer les noirs N115, N134, N234, N339, N347, N375. La quantité de noir de carbone présente dans la charge renforçante totale peut varier dans de larges limites, cette quantité de noir de carbone étant préférentiellement inférieure à la quantité de charge blanche renforçante présente dans la composition de caoutchouc .

De manière préférentielle, le taux de charge renforçante totale (charge blanche renforçante plus noir de carbone le cas échéant) est compris entre 10 et 200 pce, plus préférentiellement entre 20 et 150 pce, l'optimum étant différent selon les applications visées ; en effet, le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour les bandes de roulement de pneumatiques aptes à rouler à grande vitesse, la quantité de charge blanche renforçante, en particulier s'il s'agit de silice, est de préférence comprise entre 30 et 120 pce, plus préférentiellement comprise entre 40 et 100 pce.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987) ; la surface spécifique CTAB est la surface externe déterminée selon la même norme AFNOR-NFT-45007 de novembre 1987.

II-3. Agent de couplage (composant C)

Dans les compositions de l'invention, le couplage (charge blanche/élastomère diénique) est assuré par un agent de couplage spécifique (composant C) auquel est associé, pour activer ce couplage, un activateur de couplage particulier (composant D).

L'agent de couplage (composant C) utilisé dans les compositions de caoutchouc conformes à l'invention a

pour caractéristique essentielle d'être porteur d'une double liaison éthylénique activée (fonction "X") lui permettant de se greffer sur l'élastomère diénique. Par liaison "activée", on entend de manière connue une liaison rendue plus apte à réagir (dans le cas présent, avec l'élastomère diénique). Bien entendu, comme tout autre agent de couplage (charge blanche/élastomère diénique), il est également porteur d'une seconde fonction (fonction "Y") lui permettant de se greffer sur la charge blanche renforçante, par exemple une fonction alkoxysilyle.

Des alkoxysilanes, par exemple, porteurs d'une double liaison éthylénique activée sont connus de l'homme du métier, notamment comme agents de couplage (charge blanche/élastomère diénique) dans des compositions de caoutchouc ; les documents US-A-4 370 448, US-A-4 603 158, DE-A-4319142, la demande de brevet publiée sous le numéro JP64-29385 décrivent en détail de tels composés connus et/ou leurs procédés d'obtention.

La double liaison éthylénique est de préférence activée par la présence d'un groupe électro-attracteur adjacent, c'est-à-dire fixé sur un des deux atomes de carbone de la double liaison éthylénique. On rappelle que, par définition, un groupe "électro-attracteur" est un radical ou groupe fonctionnel susceptible d'attirer les électrons à lui-même plus que ne le ferait un atome d'hydrogène s'il occupait la même place dans la molécule considérée.

Ce groupe électro-attracteur ou "activant" est de préférence choisi parmi les radicaux porteurs d'au moins une des liaisons C=O, C=C, C≡C, OH, OR (R alkyle) ou OAr (Ar aryle), ou d'au moins un atome de soufre et/ou d'azote, ou d'au moins un halogène.

On citera plus préférentiellement un groupe activant choisi parmi les radicaux acyles (-COR), carbonyles (>C=O), carboxyle (-COOH), carboxy-esters (-COOR), carbamyles (-CO-NH2 ; -CO-NH-R ; -CO-N-$R_2$), alkoxy (-OR), aryloxy (-OAr), hydroxy (-OH), alcényles (-CH=CHR), alcynyles (-C≡CR), napthyle ($C_{10}H_7$-), phényle ($C_6H_5$-), les radicaux porteurs d'au moins un atome de soufre (S) et/ou d'azote (N), ou d'au moins un halogène.

A titre d'exemples particuliers d'un tel groupe activant, on peut mentionner notamment, outre ceux déjà cités, les radicaux acétyle, propionyle, benzoyle, toluyle, formyle, méthoxycarbonyle, éthoxycarbonyle, méthylcarbaruyle, éthylcaibamyle, benzylcarbamyle, phénylcarbamyle, diméthylcarbamyle, diéthylcarbamyle, dibenzylcarbamyle, diphénylcarbamyle, méthoxy, éthoxy, phénoxy, benzyloxy, vinyle, isopropényle, isobutényle, éthynyle, xylyl, tolyl, méthylthio, éthylthio, benzylthio, phénylthio, thiocarbonyle, thiurame, sulfinyles, sulfonyles, thiocyanato, amino, toluidino, xylidino, cyano, cyanato, isocyanato, isothiocyanato, hydroxyamino, acétamido, benzamido, nitroso, nitro, azo, hydrazo, hydrazino, azido, uréido, les radicaux porteurs d'au moins un atome de chlore ou de brome.

Plus préférentiellement encore, le groupe électro-attracteur est choisi parmi les carbonyles, carboxyles, carboxy-esters, les radicaux porteurs de soufre et/ou d'azote avec une racine carbonyle.

On utilise tout particulièrement, dans la composition conforme à l'invention, un agent de couplage porteur d'une double liaison éthylénique activée par un radical adjacent porteur d'une liaison (C=O).

A titre d'agents de couplage convenant préférentiellement pour la mise en oeuvre de l'invention, on utilise, sans que la définition ci-après soit limitative, des agents de couplage du type alkoxysilanes, en particulier ceux répondant à la formule générale (I) suivante:

(I) Z-T-Y,

dans laquelle:

- Z est un groupement porteur de la fonction X (double liaison éthylénique activée) capable de réagir avec l'élastomère diénique;
- T est un groupe hydrocarboné divalent;
- Y répond à l'une des formules ci-après:

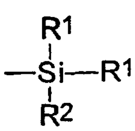 ; 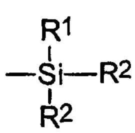 ; 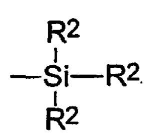 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$;
- les radicaux $R^2$, substitués ou non substitués, identiques ou différents entre eux, représentent un groupe alkoxyle en $C_1$-$C_{18}$ ou cycloalkoxyle en $C_5$-$C_{18}$.

Le groupe T, substitué ou non substitué, est de préférence un radical hydrocarboné divalent, saturé ou non saturé, comportant de 1 à 18 atomes de carbone. Conviennent notamment des groupements alkylène en $C_1$-$C_{18}$ ou des groupements arylène en $C_6$-$C_{12}$, plus particulièrement des alkylènes en $C_1$-$C_{10}$, notamment en $C_2$-$C_4$, en particulier le propylène.
Les radicaux $R^1$ sont préférentiellement des groupes alkyle en $C_1$-$C_6$, cyclohexyle ou phényle, notamment des groupes alkyle en $C_1$-$C_4$, plus particulièrement le méthyle et/ou l'éthyle.
Les radicaux $R^2$ sont préférentiellement des groupes alkoxyle en $C_1$-$C_8$ ou cycloalkoxyle en $C_5$-$C_8$, plus particulièrement le méthoxyle et/ou l'éthoxyle.
Le groupement Z est le groupement porteur de la double liaison Carbone-Carbone activée (fonction "X") destinée à se greffer sur l'élastomère diénique lors de l'étape de vulcanisation, par formation d'une liaison covalente avec ce dernier.
Selon un mode particulièrement préférentiel de l'invention, le groupement Z de la formule (I) ci-dessus est choisi parmi les structures de formules (Z-1), (Z-2) ou (Z-3) ci-après:

(Z-1) 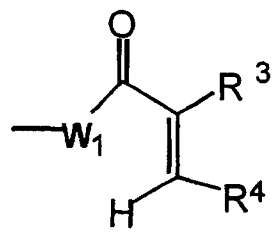

(Z-2) 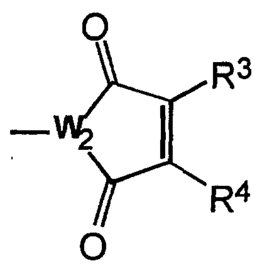

(Z-3) 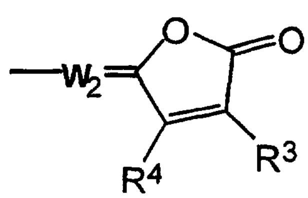

Les symboles utilisés dans ces formules ont les significations suivantes:

- $W_1$ est O, NH, S ou $CH_2$;
- $W_2$ est N ou CH;
- les radicaux $R^3$ et $R^4$, identiques ou différents entre eux, représentent l'hydrogène, un alkyle en $C_1$-$C_6$, substitué ou non substitué, ou un halogène, notamment le brome, avec la réserve que lorsque $R^4$ est le groupe COOH, $R^3$ est un atome d'hydrogène.

On note que les "rotules" $W_1$ et $W_2$ ont pour rôle d'assurer la liaison entre le radical T et la fonction X (double liaison activée) du groupement Z de la formule (I). Le point commun aux trois structures ci-dessus est la présence d'une double liaison éthylénique (C=C) activée par au moins un groupement carbonyle (>C=O) adjacent.
Préférentiellement, l'agent de couplage de formule (I) utilisé dans la composition conforme à l'invention, porteur du groupement Z ci-dessus, est un (mono-, di- ou tri-)alkoxy($C_1$-$C_4$)-silylalkyl($C_1$-$C_4$)silane, i.e., un silane porteur,

au titre de la fonction "Y", d'au moins un radical alkoxyle en $C_1$-$C_4$ (radicaux $R^2$), le groupe hydrocarboné T étant un alkylène en ($C_1$-$C_4$). Conviennent en particulier les (mono-,di- ou tri-)alkoxy($C_1$-$C_4$)-silylpropyle-silanes, le groupe hydrocarboné T étant le propylène.

Plus préférentiellement, cet agent de couplage est choisi dans le groupe constitué par les acrylates d'alkoxy ($C_1$-$C_4$)-silylpropyle, les méthacrylates d'alkoxy($C_1$-$C_4$)-silylpropyle, les acrylamides d'alkoxy($C_1$-$C_4$)-silylpropyle, les méthacrylamides d'alkoxy($C_1$-$C_4$)-silylpropyle, les maléimides d'alkoxy($C_1$-$C_4$)-silylpropyle, les isomaléimides d'alkoxy ($C_1$-$C_4$)-silylpropyle, les acides N-(propyl-alkoxysilane) maléamiques, les acides N-(propyl-alkoxysilane) fumaramiques, et les mélanges de ces composés.

A titre d'exemples préférentiels, on citera le méthacrylate de triméthoxy-silylpropyle (en abrégé TMSPM), encore appelé méthacryloxypropyltriméthoxysilane (formule II-1 ci-dessous), l'acide N-(propyl-triéthoxysilane) maléamique (formule II-2), et l'isomaléimide de N-(propyltriéthoxysilane) (formule II-3) (avec Me = méthyle ; Et = éthyle):

(II-1)

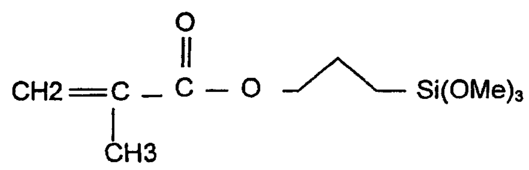

(II-2)

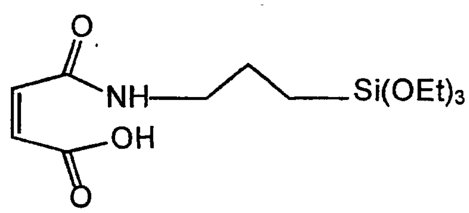

(II-3)

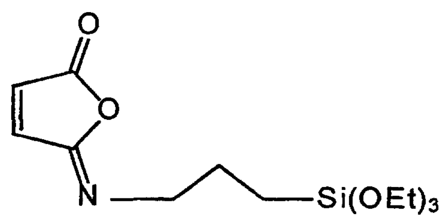

Certains de ces composés sont connus comme agents de couplage (charge blanche/élastomère diénique) et ont par exemple été décrits dans les documents précités JP64-29385, US-A-4 603 158, US-A-4 370 448, DE-A-4319142. Le composé de formule II-1 est notamment commercialisé par la société Hüls sous la dénomination Dynasylan Memo.

Dans les compositions de caoutchoucs conformes à l'invention, la teneur en composant (C) est de préférence comprise entre 0,5% et 20% en poids par rapport au poids de charge blanche renforçante. En dessous des taux minima indiqués l'effet risque d'être insuffisant, alors qu'au delà des taux maxima indiqués ci-dessus on n'observe généralement plus d'amélioration du couplage, alors que les coûts de la composition augmentent. Pour ces raisons, la teneur en composant C est de préférence comprise entre 3 et 15% en poids par rapport au poids de charge blanche renforçante, plus préférentiellement encore comprise entre 5 et 12%.

Bien entendu, afin de réduire les coûts des compositions de caoutchouc, il est souhaitable d'en utiliser le moins possible, c'est-à-dire le juste nécessaire pour un couplage suffisant entre l'élastomère diénique et la charge blanche renforçante. La forte activation apportée par l'initiateur radicalaire (composant D) permet, dans un grand nombre de cas, d'utiliser le composant C à un taux préférentiel inférieur à 10%, plus préférentiellement encore inférieur à 8% par rapport au poids de charge blanche renforçante ; des taux compris entre 4% et 8% sont par exemple possibles.

Enfin, on notera que l'agent de couplage (composant C) précédemment décrit pourrait être préalablement greffé (via la fonction "Y") sur la charge blanche renforçante, la charge ainsi "précouplée" pouvant être liée ultérieurement à l'élastomère diénique, par l'intermédiaire de la fonction libre "X".

II-4. Activateur de couplage (composant D)

La seconde composante essentielle pour le couplage (charge blanche/élastomère diénique) est un activateur de couplage, apte à activer c'est-à-dire à augmenter la fonction de couplage de l'agent de couplage décrit précédemment ; cet activateur de couplage, utilisé en très faible proportion (moins de 1 pce), est un initiateur radicalaire (encore appelé amorceur radicalaire) du type à amorçage thermique.

De manière connue, un initiateur radicalaire est un composé organique susceptible, suite à une activation énergétique, de générer des radicaux libres *in situ,* dans son milieu environnant. L'initiateur radicalaire des compositions de l'invention est un initiateur du type à amorçage thermique, c'est-à-dire que l'apport d'énergie, pour la création des radicaux libres, doit se faire sous forme thermique. On pense que la génération de ces radicaux libres favorise, lors de la fabrication (malaxage thermomécanique) des compositions de caoutchouc, une meilleure interaction entre l'agent de couplage et l'élastomère diénique.

On choisit de préférence un initiateur radicalaire dont la température de décomposition est inférieure à 180°C, plus préférentiellement inférieure à 160°C, de telles gammes de températures permettant de bénéficier pleinement de l'effet d'activation du couplage, lors de la fabrication des compositions conformes à l'invention.

Ainsi, le composant D est choisi de préférence dans le groupe constitué par les peroxydes, les hydroperoxydes, les composés azido, les composés bis(azo), les peracides, les peresters et les mélanges de ces composés.

Plus préférentiellement, le composant D est choisi dans le groupe constitué par les peroxydes, les composés bis(azo), les peresters et les mélanges de deux ou plus de ces composés. A titre d'exemples, on citera notamment le peroxyde de benzoyle, le peroxyde d'acétyle, le peroxyde de lauryle, le peroxyde de cumyle, le peroxyde de t-butyle, le peracétate de *t*-butyle, l'hydroperoxyde de *t*-butyle, l'hydroperoxyde de cumène, le peroxyde de t-butyl cumyle, le peroxyde de 2,5-diméthyl-2,5-bis(*t*-butyl) 3-hexyne, le peroxyde de 1,3-bis (*t*-butyl-isopropyl) benzène, le peroxyde de 2,4-dichlorobenzoyle, le perbenzoate de t-butyle, le peroxyde de 1,1 bis(t-butyl)3,3,5-triméthylcyclohexane, le 1,1'-azobis(isobutyronitrile) (en abrégé "AIBN"), le 1,1'-azobis(secpentylnitrile), le 1,1'-azobis(cyclohexanecarbonitrile).

Selon un mode particulièrement préférentiel de réalisation de l'invention, l'initiateur radicalaire utilisé est le peroxyde de 1,1 bis(t-butyl)3,3,5-triméthylcyclohexane répondant de manière connue à la formule (III-1) qui suit (Me = méthyle):

(III-1)

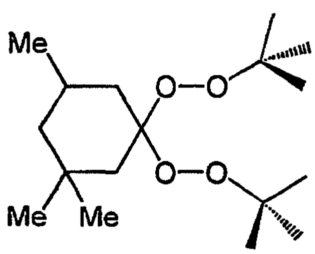

Un tel composé est connu comme agent de réticulation, notamment pour des caoutchoucs diéniques (voir par exemple Kempermann, Rubber Chem. Tech. (1987), 61, p. 422) ; il est commercialisé par exemple par la société Flexsys sous la dénomination Trigonox 29-40 (40% en poids de peroxyde sur un support solide de carbonate de calcium).

Selon un autre mode de réalisation avantageux de l'invention, l'initiateur radicalaire utilisé est le 1,1'-azobis (isobutyronitrile)- en abrégé AIBN - répondant de manière connue à la formule (III-2) qui suit:

(III-2)

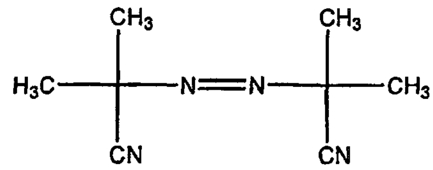

Un tel composé est connu comme initiateur radicalaire amorceur de polymérisation (voir par exemple J. Org. Chem. (1987), 52, p. 2859) ; il est commercialisé par exemple par la société Du Pont de Nemours sous la dénomination Vazo 64.

Comme indiqué précédemment, l'initiateur radicalaire est utilisé en très faible proportion dans les compositions conformes à l'invention, à savoir à un taux compris entre 0,05 et 1 pce.

En dessous du minimum indiqué l'effet est insuffisant, alors qu'au delà du maximum indiqué on n'observe plus d'amélioration du couplage et que l'on s'expose aux risques de grillage (réticulation prématurée), notamment si l'initiateur radicalaire utilisé est susceptible d'agir comme agent de réticulation à des taux plus élevés (cas notamment des peroxydes).

Dans la majorité des cas, on a constaté qu'un taux particulièrement bas, compris de préférence entre 0,05 et 0,5 pce, était déjà suffisant pour activer efficacement la fonction de couplage du composant C ; de manière particulièrement avantageuse, on choisira un taux d'initiateur radicalaire compris entre 0,1 et 0,3 pce. A des taux aussi faibles que ceux ici préconisés, il est évident pour l'homme du métier que les initiateurs radicalaires à amorçage thermique, quels qu'ils soient, ne sont pas en mesure de conduire à une réticulation des compositions (qui se traduirait alors par une augmentation significative de rigidité) même si ces initiateurs possèdent le cas échéant, à des taux beaucoup plus élevés, un pouvoir réticulant vis-à-vis des élastomères diéniques.

Bien entendu, la teneur optimale en composant D sera également ajustée, dans les fourchettes indiquées ci-dessus, en fonction des conditions particulières de réalisation de l'invention, à savoir du type d'élastomère diénique (composant A), de la nature de la charge blanche renforçante (composant B), en particulier de la nature et de la quantité d'agent de couplage (composant C) utilisé. De préférence, la quantité de composant D représente entre 1% et 10%, plus préférentiellement entre 2% et 5% en poids par rapport à la quantité de composant C.

II-5. Additifs divers

Bien entendu, les compositions de caoutchouc conformes à l'invention comportent également tout ou partie des additifs habituellement utilisés dans les compositions de caoutchouc diénique destinées à la fabrication de pneumatiques, comme par exemple des plastifiants, des agents de protection, un système de réticulation à base soit de soufre, soit de donneurs de soufre, des accélérateurs de vulcanisation, des huiles d'extension, etc ... A la charge blanche renforçante peut être également associée, si besoin est, une charge blanche conventionnelle peu ou non renforçante, par exemple des particules d'argiles, de bentonite, talc, craie, kaolin, oxydes de titane.

Les compositions de caoutchouc conformes à l'invention peuvent également contenir, en complément des agents de couplage (à double liaison activée) et des activateurs de couplage (initiateurs radicalaires) précédemment cités, des agents de recouvrement de la charge blanche renforçante, comportant par exemple la seule fonction Y, ou plus généralement des agents d'aide à la mise en oeuvre susceptibles de manière connue, grâce à une amélioration de la dispersion de la charge blanche dans la matrice de caoutchouc et à un abaissement de la viscosité des compositions, d'améliorer leur faculté de mise en oeuvre à l'état cru, ces agents étant par exemple des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes). Les compositions conformes à l'invention pourraient contenir aussi d'autres agents de couplage, en plus des agents de couplage porteurs d'au moins une double liaison éthylénique activée, par exemple des aikoxysilanes polysulfurés.

II-6. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée $T_{max}$)

comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation ; de telles phases ont été décrites par exemple dans la demande EP-A-0 501 227 précitée.

Le procédé de fabrication selon l'invention est caractérisé en ce qu'au moins tous les constituants de base des compositions conformes à l'invention, à savoir le composant B, le composant C et le composant D (à un taux compris entre 0,05 et 1 pce) sont incorporés par malaxage au composant A au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

On choisit de préférence un initiateur radicalaire dont la température de décomposition est inférieure à la température maximale $T_{max}$ atteinte lors du malaxage thermo-mécanique.

A titre d'exemple, la première phase (non-productive) est conduite en une seule étape thermomécanique au cours de laquelle on introduit, dans un mélangeur approprié tel qu'un mélangeur interne usuel, tous les constituants nécessaires y compris le système de couplage formé par l'association des composants C et D, les éventuels agents de recouvrement ou de mise en oeuvre complémentaires et autres additifs divers, à l'exception du système de vulcanisation. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermique complémentaire, notamment pour améliorer encore la dispersion, dans la matrice élastomérique, de la charge blanche renforçante et de son système de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée par exemple sous la forme d'une feuille, d'une plaque ou encore d'un profilé de caoutchouc utilisable pour la fabrication de semi-finis tels que des bandes de roulement.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Il va de soi que l'invention concerne les compositions de caoutchouc précédemment décrites tant à l'état cru (i.e., avant cuisson) qu'à l'état cuit (i.e., après réticulation ou vulcanisation).

Bien entendu, les compositions conformes à l'invention peuvent être utilisées seules ou en coupage (i.e., en mélange) avec toute autre composition de caoutchouc utilisable pour la fabrication de pneumatiques.

## III. EXEMPLES DE REALISATION DE L'INVENTION

III-1. Préparation des compositions de caoutchouc

On procède pour les essais qui suivent de la manière suivante: on introduit dans un mélangeur interne, rempli à 70% et dont la température initiale de cuve est d'environ 60°C, l'élastomère diénique ou le mélange d'élastomères diéniques, la charge renforçante, l'agent de couplage (composant C) et son activateur (composant D), puis les divers autres ingrédients à l'exception du système de vulcanisation. On conduit alors un travail thermomécanique (phase non-productive) en une ou deux étapes selon les cas (durée totale du malaxage comprise entre 2 et 10 minutes), jusqu'à atteindre une température maximale de "tombée" d'environ 165°C.

On récupère le mélange ainsi obtenu, on le refroidit puis on ajoute soufre et sulfénamide sur un mélangeur externe (homo-finisseur) à 30°C, en mélangeant le tout (phase productive) pendant un temps approprié compris entre 5 et 12 minutes selon les cas.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement.

Dans les essais qui suivent, la charge blanche renforçante (silice et/ou alumine) constitue la totalité de la charge renforçante ; mais une fraction de cette dernière, de préférence minoritaire, pourrait être remplacée par du noir de carbone.

III-2. Essais

A) Essai 1

Ce premier essai a pour but de démontrer les performances de couplage améliorées d'un alkoxysilane à double liaison activée lorsqu'il est associé à un initiateur radicalaire à amorçage thermique. Ces performances sont comparées d'une part à celles d'un agent de couplage conventionnel TESPT, d'autre part à l'alkoxysilane à double liaison activée lui-même lorsque ce dernier est utilisé seul, c'est-à-dire sans initiateur radicalaire.
On compare cinq compositions de caoutchouc à base de caoutchouc naturel et renforcées de silice, ces compositions étant destinées à des bandes de roulement pour pneumatiques Poids-lourd.
Ces cinq compositions sont identiques aux différences près qui suivent:

- composition N°1: agent de couplage TESPT (4 pce) utilisé seul;
- composition N°2: TESPT (4 pce) auquel est associé 0,16 pce de peroxyde;
- composition N°3: agent de couplage TMSPM (3,7 pce) utilisé seul;
- composition N°4: TMSPM (3,7 pce) auquel est associé 0,16 pce de peroxyde;
- composition N°5: peroxyde (0,16 pce) incorporé avec le système de vulcanisation.

Les compositions N°1 et N°3 sont les compositions de référence de l'art antérieur ; seule la composition N°4 est conforme à l'invention. Les deux agents de couplage testés (TESPT et TMSPM) sont utilisés à un taux isomolaire en fonctions triéthoxysilane, c'est-à-dire qu'on utilise, quelle que soit la composition testée, le même nombre de moles de fonctions triéthoxysilanes réactives vis-à-vis de la silice et de ses groupes hydroxyles de surface. Par rapport au poids de charge blanche, le taux de TESPT est égal à 8%, celui de TMSPM est inférieur à 8% (précisément 7,4%) ; la quantité d'initiateur radicalaire utilisée dans la composition conforme à l'invention est très faible (0,16 pce, soit 4,3% par rapport au poids de composant C).
Les tableaux 1 et 2 donnent la formulation des différentes compositions (tableau 1 - taux des différents produits exprimés en pce), leurs propriétés avant et après cuisson (25 min à 150°C). La figure 1 reproduit quant à elle les courbes de module (en MPa) en fonction de l'allongement (en %) ; ces courbes sont notées C1 à C5 et correspondent respectivement aux compositions N°1 à N°5. Le système de vulcanisation est constitué par soufre et suifénamide, auquel est ajouté 0,16 pce de peroxyde dans le cas de la composition N°5.
Le peroxyde utilisé ici est un peroxyde de 1,1 bis(t-butyl)3,3,5-triméthylcyclohexane (formule (III-1) précédente), disponible commercialement ("Trigonox 29/40") sous une forme dite "supportée", à raison de 40% en poids de peroxyde sur un support solide de carbonate de calcium ; les taux indiqués dans les différents tableaux qui suivent correspondent à la proportion réelle de peroxyde, corrigée de (i.e., sans) la quantité de carbonate de calcium.
L'examen des différents résultats du tableau 2 et de la figure 1 conduit aux observations suivantes:

- les temps de grillage (T5) sont suffisamment longs dans tous les cas (22 à 30 minutes), offrant une marge de sécurité importante vis-à-vis du problème de grillage;

- les valeurs de plasticité Mooney restent basses (nettement inférieures à 60 UM) quelle que soit la composition considérée, ce qui est l'indicateur d'une très bonne aptitude des compositions à la mise en oeuvre à l'état cru;

- les plasticités Mooney sont sensiblement identiques entre les compositions N°1 et N°2 d'une part, entre les compositions N°3 et N°5 d'autre part ; ceci démontre que l'ajout de peroxyde au très faible taux préconisé, tant au mélangeur interne qu'au mélangeur externe (dans ce dernier cas avec le système de vulcanisation), n'a aucun effet réticulant sur l'élastomère diénique;

- il faut en déduire que l'augmentation de viscosité (+ 10 points) observée sur la composition N°4 conforme à l'invention, comparée à la composition témoin N°3, est due à la formation lors du mélangeage de liaisons supplémentaires entre la charge blanche et l'élastomère diénique, en d'autres termes d'un meilleur couplage (charge blanche/élastomère) dû à une activation du couplage apportée par le peroxyde;

- après cuisson, la composition conforme à l'invention (N°4) est celle qui présente les valeurs les plus élevées de module sous forte déformation (M300) et de rapport M300/M100, indicateurs connus pour l'homme du métier de la qualité du renforcement apporté par la charge blanche;

- c'est encore la composition N°4 qui présente, et ceci de manière nette, le compromis le plus avantageux en ce qui concerne les propriétés hystérétiques : pertes PH très faibles, diminution très sensible de la non-linéarité $\Delta G^*$

et de $\tan(\delta)_{max}$;

- ces résultats améliorés de la composition N°4 sont obtenus grâce à l'utilisation combinée de l'alkoxysilane à double liaison éthylénique activée et de l'initiateur radicalaire, comme le montre clairement une comparaison entre la composition N°4 d'une part et les compositions de l'art antérieur N°1 à N°3 (comparer notamment compositions N°3 et N°4);

- le peroxyde n'a par contre aucun effet d'activation sur l'agent de couplage conventionnel TESPT (comparer composition N°1 et N°2);

- une comparaison entre les compositions N°3, N°4 et N°5 montre d'autre part que le peroxyde, lorsqu'il est incorporé dans le mélangeur externe à cylindres (composition N°5) à un taux aussi faible que 0,16 pce, n'a strictement aucun effet sur les propriétés des compositions, tant à l'état cru qu'après cuisson ;

- la figure 1 confirme les observations précédentes: la composition N°4 (courbe C4) révèle un niveau de renforcement (module) supérieur à grande déformation (allongements de 300% et plus), comparée d'une part aux compositions N°1 et N°2 à base de TESPT (courbes C1 et C2), d'autre part aux compositions N°3 et N°5 à base de TMSPM seul (courbes C3 et C5) ; pour un tel domaine d'allongements, ce comportement illustre de manière connue une meilleure qualité de la liaison entre la charge blanche renforçante et l'élastomère diénique.

En résumé, les résultats ci-dessus sont représentatifs, dans le cas de la composition conforme à l'invention, d'un meilleur couplage entre la charge blanche renforçante et l'élastomère diénique, en d'autres termes d'une activation par le peroxyde de la fonction de couplage de l'alkoxysilane à double liaison éthylénique activée.

Les résultats améliorés de la composition N°4 laissent présager à la fois une basse résistance au roulement et une très bonne résistance à l'usure pour des bandes de roulement de pneumatiques à base de compositions conformes à l'invention.

Cet essai démontre d'autre part que, pour pouvoir activer l'agent de couplage, le peroxyde (connu par ailleurs comme agent de réticulation à un taux plus élevé, typiquement de l'ordre de 5 à 7 pce) doit être introduit dans le mélangeur interne, c'est-à-dire pendant la phase non-productive en même temps que l'agent de couplage, et non incorporé dans le mélangeur externe (phase productive) comme usuellement pratiqué pour un agent de réticulation.

Lorsque le peroxyde est incorporé au cours de la phase productive, dans le mélangeur externe à cylindres, on voit clairement qu'il n'a, pour un taux aussi bas que celui préconisé (moins de 1 pce, de préférence moins de 0,5 pce), aucun effet de réticulation sur l'élastomère diénique.

B) Essai 2

Le but de cet essai est de démontrer que les effets techniques de l'invention ne sont obtenus que sur des agents de couplage porteurs d'une double liaison éthylénique du type activée.

On compare pour cela quatre compositions de caoutchouc à base de caoutchouc naturel et renforcées de silice, comme les compositions de l'essai précédent, ces compositions étant notamment destinées à des bandes de roulement de pneumatique Poids-lourd.

Les quatre compositions testées sont identiques aux différences près qui suivent:

- composition N°6: agent de couplage 1-octène-triéthoxysilane utilisé seul (4 pce);
- composition N°7: 1-octène-triéthoxysilane (4 pce) auquel est associé 0,16 pce du peroxyde de formule III-1;
- composition N°8: isomaléimide de N-(propyltriéthoxysilane) (4 pce) auquel est associé 0,16 pce du peroxyde de formule III-1;
- composition N°9: acide N-(propyltriéthoxysilane) maléamique (4 pce) auquel est associé 0,16 pce du peroxyde de formule III-1.

Les divers agents de couplage testés sont utilisés comme précédemment à un taux isomolaire en fonctions triéthoxysilane. Par rapport au poids de charge blanche, le taux d'agent de couplage est dans tous les cas inférieur à 10% (précisément 9,6%) ; la quantité de peroxyde (composant D) dans la composition conforme à l'invention est très faible : 0,16 pce, soit 3,3% seulement par rapport au poids de composant C.

L'agent de couplage utilisé pour les compositions N°6 et N°7 est un aikoxysilane connu dont le groupement fonctionnel "X" est une double liaison éthylénique du type non activée ; ce composé répond à la formule suivante (OEt = éthoxyle):

$$CH_2=CH-(CH_2)_6-Si(OEt)_3$$

Les deux autres alkoxysilanes testés ont déjà été décrits (voir formules II-2 et II-3 supra) ; ils comportent tous deux une double liaison éthylénique activée par au moins un groupement carbonyle adjacent. Ces alkoxysilanes ont été synthétisés de manière connue, selon les modes opératoires décrits ci-après:

- Acide N-(propyltriéthoxysilane)maléamique (formule II-2): dans un tricol de 500 ml surmonté d'un réfrigérant, on dissout 17,7 g (0,18 mol) d'anhydride maléique dans 60 ml de THF (tétrahydrofuranne) anhydre ; on additionne lentement (durée : environ 1h 30min), à la température ambiante (20°C), une solution de 41 g (0,1 mol) de 3-aminopropyl-triéthoxysilane dilué dans 155 ml de THF anhydre ; la solution initialement incolore prend alors une teinte jaune ; l'agitation est poursuivie à température ambiante pendant deux heures au bout desquelles les produits de départs ont été entièrement consommés ; on concentre le milieu réactionnel à l'évaporateur rotatif et on obtient 57g d'un solide jaune dont l'analyse RMN révèle qu'il s'agit bien de l'acide N-(propyltriéthoxysilane) maléamique de formule (II-2) précitée (pureté supérieure à 95%).

- Le N-(3-propyltriéthoxysilane)isomaléimide est obtenu par action de la dicyclohexylcarbodiimide (DCC) sur l'acide N-(3-propyltriéthoxysilane)maléamique dans le THF, généré in situ à partir de l'anhydride maléique et du 3-aminopropyltriéthoxysilane ; dans un tricol de 1 litre, on additionne goutte à goutte 41,8 g (0,2 mol) de DCC dissous dans 115 ml de THF anhydre à 0,2 mol d'acide N-(3-propyltriéthoxy silane)maléamique généré in situ dans 235 ml de THF anhydre ; un précipité blanc de dicyclohexylurée (DHU) apparaît ; l'agitation à température ambiante est poursuivie toute la nuit ; la DHU est filtrée, le THF est évaporé puis le milieu réactionnel filtré une dernière fois pour éliminer la DCC résiduelle ; 55 g d'un liquide marron-orangé sont ainsi obtenus dont l'analyse RMN révèle qu'il s'agit bien de l'isomaléimide de N-(propyltriéthoxysilane) de formule (II-3) précitée (pureté supérieure à 95%).

Seules les compositions N°8 et N°9 sont donc conformes à l'invention.

Les tableaux 3 et 4 donnent la formulation des différentes compositions, leurs propriétés avant et après cuisson (150°C, 25 minutes). La figure 2 reproduit quant à elle les courbes de module (en MPa) en fonction de l'allongement (en %) ; ces courbes sont notées C6 à C9 et correspondent respectivement aux compositions N°6 à N°9.

Les différents résultats du tableau 4 démontrent que les compositions N°8 et N°9 conformes à l'invention présentent, comparées aux compositions témoins, des performances nettement supérieures après cuisson:

- modules aux plus fortes déformations (M100, M300) et rapport M300/M100 plus élevés, ce qui est révélateur d'un meilleur renforcement par la charge blanche renforçante;
- propriétés hystérétiques plus avantageuses : PH, non-linéarité $\Delta G^*$ et $\tan(\delta)_{max}$ sensiblement plus basses;
- contraintes à la rupture supérieures.

On note en particulier que l'incorporation du peroxyde dans la composition N°7 comportant à titre d'agent de couplage l'alkoxysilane à double liaison non activée n'a, au taux très faible utilisé de 0,16 pce, aucune incidence sur les propriétés de la composition, tant à l'état cru qu'à l'état cuit ; qu'en d'autres termes, le peroxyde n'a aucun effet d'activation sur le niveau de couplage (charge blanche/élastomère diénique) si l'alkoxysilane utilisé n'est pas porteur d'une double liaison éthylénique du type activée.

La figure 2 annexée confirme bien l'effet net d'amélioration du couplage apporté par l'initiateur radicalaire dans le cas des alkoxysilanes à double liaison éthylénique activée : on voit nettement que les valeurs de module, pour des allongements de 100% et plus, sont sensiblement identiques sur les compositions N°8 et N°9 (courbes C8 et C9 très proches) mais très nettement supérieures à celles observées sur les compositions témoins N°6 et N°7 (courbes C6 et C7). On note par ailleurs que les courbes C6 et C7 sont quasiment confondues, ce qui démontre une nouvelle fois que l'addition de 0,16 pce de peroxyde est par contre sans effet sur le niveau de couplage offert par l'agent de couplage 1-octène-triéthoxysilane.

C) Essai 3

Cet essai a pour but de démontrer l'effet avantageux de l'invention sur des compositions à base d'élastomères diéniques autres que le caoutchouc naturel, en l'occurrence un copolymère SBIR ou un copolymère SBR.

On compare quatre compositions de caoutchouc identiques aux différences près qui suivent:

- composition N°10: élastomère SBIR avec agent de couplage TESPT (6,4 pce) seul;

- composition N°11: élastomère SBIR avec agent de couplage TMSPM (6 pce) activé par 0,20 pce d'initiateur radicalaire (peroxyde);
- composition N°12: élastomère SBR avec agent de couplage TESPT (6,4 pce) seul;
- composition N°13: élastomère SBR avec agent de couplage TMSPM (6 pce) activé par 0,20 pce d'initiateur radicalaire (peroxyde).

Les compositions N°11 et N°13 sont conformes à l'invention, les compositions N°10 et N°12 utilisant l'agent de couplage conventionnel (TESPT) sont les compositions témoins. Les deux agents de couplage testés sont utilisés à un taux isomolaire, soit environ 7-8% en poids par rapport au poids de charge blanche renforçante ; la quantité d'initiateur radicalaire utilisée dans les compositions conformes à l'invention est très faible (0,20 pce) ; elle ne représente que 3,3% en poids du composant C.

Les tableaux 5 et 6 donnent la formulation des différentes compositions, leurs propriétés avant et après cuisson (150°C, 25 minutes). L'étude des différents résultats démontre que les compositions N°11 et N°13 conformes à l'invention, comparées aux compositions témoins, présentent, et ceci quel que soit l'élastomère considéré, des caractéristiques globalement améliorées:

- plasticité Mooney suffisamment basse dans tous les cas (inférieure à 55 UM);
- sécurité au grillage élevée (T5 de 30 min);
- module à forte déformation (M300) et rapport M300/M100 plus élevés, synonymes d'un meilleur renforcement et donc d'un niveau de couplage amélioré entre l'élastomère diénique et la charge blanche renforçante;
- pertes hystérétiques (PH) inférieures.

En résumé, l'agent de couplage conventionnel de référence (TESPT) procure ici des performances de couplage qui sont inférieures à celles offertes par l'alkoxysilane à double liaison activée auquel est associé, dans les proportions très faibles préconisées, un initiateur radicalaire à amorçage thermique du type peroxyde.

D) Essai 4

Cet essai illustre une nouvelle fois l'effet bénéfique de l'invention dans une composition conforme à l'invention à base de caoutchouc naturel, comportant en outre un agent de recouvrement de la charge blanche renforçante.

On compare ci-après deux compositions de caoutchouc, similaires à celles de l'essai 1 précédent, ces compositions étant identiques aux différences près qui suivent:

- composition N°14: agent de couplage TESPT (4 pce) utilisé seul;
- composition N°15: TMSPM (3 pce) activé par 0,16 pce d'initiateur radicalaire ; ajout d'un agent de recouvrement (2 pce).

La composition N°14 est le témoin de l'essai et contient 8% en poids de TESPT par rapport au poids de silice. La composition N°15 est la composition conforme à l'invention et contient avantageusement, par rapport au poids de silice, moins de 8% d'agent de couplage TMSPM (précisément 6%) et, en tant qu'activateur de couplage, une très faible quantité de peroxyde (0,16 pce soit 5,3% par rapport au poids de TMSPM).

L'agent de recouvrement est incorporé à la composition, en même temps que TMSPM et peroxyde (étape non-productive) pour améliorer encore la mise en oeuvre à l'état cru (abaissement de la viscosité) et la dispersion de la charge blanche dans la matrice élastomérique.

Les tableaux 7 et 8 donnent la formulation des différentes compositions, leurs propriétés avant et après cuisson (150°C, 25 minutes). On note que la composition N°15, comparée à la composition témoin N°14, présente des propriétés de renforcement après cuisson (M300 et rapport M300/M100) qui sont sensiblement supérieures, ainsi qu'une hystérèse améliorée (PH, $\Delta G^*$ et $\tan(\delta)_{max}$ plus faibles) : tout ceci est dû à une meilleure efficacité de couplage de l'alkoxysilane à double liaison activée, en présence du peroxyde, par rapport à l'alkoxysilane TESPT conventionnel.

E) Essai 5

Cet essai confirme les résultats des essais précédents dans le cas de compositions comportant, à titre de charge blanche renforçante, un coupage (50/50 en volume) de silice et d'alumine (alumine telle que décrite dans la demande EP-A-0 810 258 précitée).

On compare pour cela trois compositions à base de caoutchouc naturel, destinées à des bandes de roulement pour pneumatiques Poids-lourd, identiques aux différences près qui suivent:

- composition N°16: agent de couplage TESPT (4 pce);
- composition N°17: agent de couplage TMSPM (3,7 pce);
- composition N°18: TMSPM (3,7 pce) auquel est associé 0,16 pce de peroxyde.

Les compositions N°16 et N°17 sont les compositions selon l'art antérieur, seule la composition N°18 est conforme à l'invention. Les deux agents de couplage testés sont utilisés à un taux isomolaire en fonctions triéthoxysilane (même nombre de moles de fonctions réactives vis-à-vis de la charge blanche totale). Par rapport au poids de charge blanche (65 pce), le taux de TESPT est égal à environ 6% (précisément 6,2%), celui de TMSPM est inférieur à 6% (précisément 5,7%).

Les tableaux 9 et 10 donnent la formulation des différentes compositions, leurs propriétés avant et après cuisson (20 min à 150°C).

L'examen des résultats du tableau 10 confirme les avantages de la composition selon l'invention, avec notamment :

- une sécurité au grillage satisfaisante (T5 supérieure à 20 min), supérieure à celle de la composition témoin N°16;
- une plasticité Mooney suffisamment basse dans tous les cas (inférieure à 50 UM);
- des valeurs de module M300 (par rapport à la composition N°17) et de rapport M300/M100 (par rapport aux deux compositions témoin) supérieures;
- des propriétés hystérétiques améliorées, comme illustré notamment par une valeur de $\tan(\delta)_{max}$ notablement plus basse, une diminution très sensible de la non-linéarité $\Delta G^*$ et des pertes PH.

F) Essai 6

Dans cet essai, l'action de l'agent de couplage alkoxysilane (TMSPM) est activée par un initiateur radicalaire à amorçage thermique autre qu'un peroxyde, à savoir l'AIBN de formule (III-2).

On compare pour cela deux compositions de caoutchouc à base de caoutchouc naturel et renforcées de silice, identiques aux différences près qui suivent :

- composition N°19 (témoin): TMSPM (3,7pce) utilisé seul;
- composition N°20 (invention): TMSPM (3,7pce) auquel est associé 0,5 pce d'AIBN (soit 13,5% par rapport en poids d'agent de couplage).

Les tableaux 11 et 12 donnent la formulation des compositions, leurs propriétés avant et après cuisson (25 min à 150°C). La figure 3 reproduit les courbes de module (en MPa) en fonction de l'allongement (en %) ; ces courbes sont notées C19 et C20 et correspondent respectivement aux compositions N°19 et N°20.

La supériorité de la composition selon l'invention est révélée notamment par les propriétés après cuisson :

- une augmentation des modules aux fortes déformations (M100, M300) et du rapport (M300/M100), indicateurs clairs d'un renforcement amélioré,
- corrélée à des propriétés hystérétiques plus avantageuses : $\tan(\delta)_{max}$ plus faible, non-linéarité $\Delta G^*$ très inférieure, pertes PH nettement réduites.

La figure 3 confirme l'action bénéfique de l'AIBN sur l'agent de couplage, avec une courbe de module (C20) qui, pour les plus grandes déformations (allongements de 100% et plus), se situe nettement au dessus de la courbe témoin (C19), l'écart étant d'autant plus prononcé que l'allongement augmente.

L'ensemble de ces résultats illustre, comme déjà expliqué, une meilleure qualité de la liaison entre charge blanche et élastomère, due vraisemblablement à la formation lors du mélangeage de liaisons supplémentaires entre la charge blanche et l'élastomère diénique, grâce à l'activation du couplage apportée par l'AIBN.

En conclusion, comme le démontrent les divers essais qui précèdent, l'association d'un agent de couplage porteur d'une double liaison éthylénique activée avec, en quantité très faible, un initiateur radicalaire à amorçage thermique, offre aux compositions de l'invention un compromis de propriétés particulièrement avantageux par rapport

aux compositions de l'art antérieur renforcées d'une charge blanche telle que la silice.

Une telle association permet non seulement d'augmenter de manière très sensible l'efficacité de couplage des agents de couplage à double liaison éthylénique activée, mais encore de dépasser les performances de couplage fournies par les alkoxysilanes polysulfurés conventionnels tels que le TESPT.

L'invention trouve des applications particulièrement avantageuses dans les compositions de caoutchouc utilisables pour la fabrication de bandes de roulement de pneumatiques présentant à la fois une faible résistance au roulement et une résistance élevée à l'usure, en particulier lorsque ces bandes de roulement sont à base de caoutchouc naturel ou de polyisoprène de synthèse et destinées à des pneumatiques pour véhicules industriels du type Poids-lourd.

Tableau 1

| Composition N°: | 1 | 2 | 3 | 4 | 5 |
|---|---|---|---|---|---|
| NR (1) | 100 | 100 | 100 | 100 | 100 |
| silice (2) | 50 | 50 | 50 | 50 | 50 |
| silane (3) | 4 | 4 | - | - | - |
| silane (4) | - | - | 3.7 | 3.7 | 3.7 |
| peroxyde (5) | - | 0.16 | - | 0.16 | - |
| ZnO | 3 | 3 | 3 | 3 | 3 |
| acide stéarique | 2.5 | 2.5 | 2.5 | 2.5 | 2.5 |
| antioxydant (6) | 1.9 | 1.9 | 1.9 | 1.9 | 1.9 |
| soufre | 1.5 | 1.5 | 1.5 | 1.5 | 1.5 |
| CBS (7) | 1.8 | 1.8 | 1.8 | 1.8 | 1.8 |
| peroxyde (5) | - | - | - | - | 0.16 |

(1) caoutchouc naturel;
(2) silice type "HD" - Zeosil 1165MP de la société Rhodia sous forme de microperles (BET et CTAB : environ 150-160 $m^2/g$);
(3) TESPT - Si69 de la société Degussa;
(4) TMSPM - Dynasylan Memo de la société Hüls;
(5) peroxyde de formule (III-1) - Trigonox 29/40 de la société Flexsys;
(6) N-1,3-diméthylbutyl-N-phényl-para-phénylènediamine;
(7) N-cyclohexyl-2-benzothiazyl-sulfénamide.

Tableau 2

| Composition N° : | 1 | 2 | 3 | 4 | 5 |
|---|---|---|---|---|---|
| *Propriétés avant cuisson:* | | | | | |
| Mooney (UM) | 41 | 43 | 43 | 53 | 45 |
| T5 (min) | 23 | 22 | 30 | 30 | 30 |
| *Propriétés après cuisson:* | | | | | |
| M10 (MPa) | 2.7 | 2.7 | 3.7 | 3.1 | 3.7 |
| M100 (MPa) | 3.2 | 3.2 | 2.3 | 2.5 | 2.3 |
| M300 (MPa) | 7.0 | 6.9 | 5.1 | 7.1 | 5.1 |
| M300/M100 | 2.2 | 2.2 | 2.2 | 2.8 | 2.2 |
| PH | 14 | 13 | 19.5 | 14 | 19 |
| ΔG* (MPa) | 0.7 | 0.6 | 1.3 | 0.4 | 1.1 |
| $tan(\delta)_{max}$ | 0.14 | 0.13 | 0.18 | 0.12 | 0.17 |
| contrainte rupture (MPa) | 35 | 34 | 29 | 30 | 30 |
| allongement rupture (%) | 520 | 505 | 648 | 586 | 682 |

Tableau 3

| Composition N° : | 6 | 7 | 8 | 9 |
|---|---|---|---|---|
| NR (1) | 100 | 100 | 100 | 100 |
| silice (2) | 50 | 50 | 50 | 50 |
| silane (8) | 4 | 4 | - | - |
| silane (9) | - | - | 4.8 | - |
| silane (10) | - | - | - | 4.8 |
| peroxyde (5) | - | 0.16 | 0.16 | 0.16 |
| ZnO | 2.5 | 2.5 | 2.5 | 2.5 |
| acide stéarique | 2 | 2 | 2 | 2 |
| antioxydant (6) | 1.9 | 1.9 | 1.9 | 1.9 |
| soufre | 1.5 | 1.5 | 1.5 | 1.5 |
| CBS (7) | 1.8 | 1.8 | 1.8 | 1.8 |

(1) idem tableau 1;
(2) idem tableau 1;
(5) idem tableau 1;
(6) idem tableau 1;
(7) idem tableau 1;
(8) 1-octènetriéthoxysilane;
(9) isomaléimide de N-(propyltriéthoxysilane)- formule II-3;
(10) acide N-(propyltriéthoxysilane) maléamique - formule II-2.

Tableau 4

| Composition N° | 6 | 7 | 8 | 9 |
|---|---|---|---|---|
| *Propriétés avant cuisson:* | | | | |
| Mooney(UM) | 42 | 43 | 44.5 | 43 |
| T5 (min) | 30 | 30 | 30 | 30 |
| *Propriétés après cuisson:* | | | | |
| M10 (MPa) | 4.3 | 4.2 | 3.5 | 3.5 |
| M100 (MPa) | 2.1 | 1.9 | 2.7 | 2.5 |
| M300 (MPa) | 3.4 | 3.0 | 7.7 | 7.1 |
| M300/M100 | 1.6 | 1.6 | 2.8 | 2.8 |
| PH(%) | 23 | 24 | 15 | 16 |
| $\Delta G^*$ (MPa) | 2 | 2 | 0.5 | 0.5 |
| $\tan(\delta)_{max}$ | 0.19 | 0.20 | 0.11 | 0.11 |
| contrainte rupture (MPa) | 26 | 24 | 29 | 27 |
| allongement rupture (%) | 713 | 711 | 553 | 536 |

Tableau 5

| Composition N° : | 10 | 11 | 12 | 13 |
|---|---|---|---|---|
| SBIR (11) | 100 | 100 | - | - |
| SBR (12) | - | - | 137.5 | 137.5 |

(11) SBIR avec 20% de motifs butadiène (45% de 1-2 ; 45% de trans); 44% de motifs isoprène (37% de 3,4 ; 24% de trans); et 36% de motifs styrène; Tg = -23°C;

(12) SBR solution avec 73,5 % de motifs butadiène (59.5 % de 1-2; 23% de trans); 26.5 % de motifs styrène; Tg = -29°C ; 100 pce SBR (sec) étendu avec 37,5 pce d'huile aromatique (soit un total de137,5 pce).

Tableau 5 (suite)

| Composition N° : | 10 | 11 | 12 | 13 |
|---|---|---|---|---|
| silice (2) | 80 | 80 | 80 | 80 |
| silane (3) | 6.4 | - | 6.4 | - |
| silane (4) | - | 6.0 | - | 6.0 |
| peroxyde (5) | - | 0.2 | - | 0.2 |
| huile aromatique | 37.5 | 37.5 | - | - |
| ZnO | 2.5 | 2.5 | 2.5 | 2.5 |
| DPG | 1.5 | 1.5 | 1.5 | 1.5 |
| acide stéarique | 2 | 2 | 2 | 2 |
| antioxydant (6) | 1.9 | 1.9 | 1.9 | 1.9 |
| soufre | 1.1 | 1.1 | 1.1 | 1.1 |
| CBS (7) | 2 | 2 | 2 | 2 |

(2) à (7) idem tableau 1;

Tableau 6

| Composition N° : | 10 | 11 | 12 | 13 |
|---|---|---|---|---|
| *Propriétés avant cuisson:* | | | | |
| Mooney(UM) | 36 | 31 | 53 | 47 |
| T5 (min) | 19 | 30 | 18 | 30 |
| *Propriétés après cuisson:* | | | | |
| M10 (MPa) | 5.4 | 3.7 | 5.5 | 4.4 |
| M100 (MPa) | 2.8 | 2.5 | 2.8 | 2.4 |
| M300 (MPa) | 6.9 | 8.1 | 6.8 | 7.1 |
| M300/M100 | 2.4 | 3.2 | 2.4 | 2.9 |
| PH | 30 | 24 | 31 | 28 |
| $\Delta G^*$ (MPa) | 5.6 | 3 | 4.4 | 4.4 |
| $\tan(\delta)_{max}$ | 0.47 | 0.43 | 0.42 | 0.44 |
| contrainte rupture (MPa) | 21 | 17 | 24 | 23 |
| allongement rupture (%) | 703 | 481 | 599 | 581 |

Tableau 7

| Composition N° : | 14 | 15 |
|---|---|---|
| NR(1) | 100 | 100 |
| silice (2) | 50 | 50 |
| silane (3) | 4 | - |
| silane (4) | - | 3 |
| peroxyde (5) | - | 0.16 |
| PDMS (13) | - | 2 |
| ZnO | 3 | 3 |
| acide stéarique | 2.5 | 2.5 |
| antioxydant (6) | 1.9 | 1.9 |

(1) à (7) idem tableau 1;

(13) $\alpha,\omega$-dihydroxy-polydiméthylsiloxane (PS340 de la société ABCR).

Tableau 7 (suite)

| Composition N° : | 14 | 15 |
|---|---|---|
| soufre<br>CBS (7) | 1.5<br>1.8 | 1.5<br>1.8 |

(1) à (7) idem tableau 1;

Tableau 8

| Composition N° : | 14 | 15 |
|---|---|---|
| *Propriétés avant cuisson:* | | |
| Mooney (UM)<br>T5 (min) | 29<br>30 | 27<br>30 |
| *Propriétés après cuisson:* | | |
| M10 (MPa)<br>M100 (MPa)<br>M300 (MPa)<br>M300/M100 | 4.2<br>3.2<br>7.0<br>2.2 | 3.8<br>3.2<br>9.4<br>2.9 |
| PH<br>ΔG* (MPa)<br>$tan(\delta)_{max}$ | 13.5<br>0.9<br>0.13 | 10.5<br>0.6<br>0.10 |
| contrainte rupture (MPa)<br>allongement rupture (%) | 31<br>596 | 31<br>530 |

Tableau 9

| Composition N°: | 16 | 17 | 18 |
|---|---|---|---|
| NR (1) | 100 | 100 | 100 |
| silice (2) | 25 | 25 | 25 |
| alumine (14) | 40 | 40 | 40 |
| silane (3) | 4 | - | - |
| silane (4) | - | 3.7 | 3.7 |
| peroxyde (5) | - | - | 0.16 |
| ZnO | 3 | 3 | 3 |
| acide stéarique | 2.5 | 2.5 | 2.5 |
| anti-oxydant (6) | 1.9 | 1.9 | 1.9 |
| soufre | 1.5 | 1.5 | 1.5 |
| CBS (7) | 1.8 | 1.8 | 1.8 |

(1) à (7) idem tableau 1;

(14) alumine CR125 de la société Baïkowski (sous forme de poudre - BET égale à environ 105 $m^2/g$)

Tableau 10

| Composition N°: | 16 | 17 | 18 |
|---|---|---|---|
| *Propriétés avant cuisson:* | | | |
| Mooney (UM)<br>T5 (min) | 38<br>12 | 37<br>26 | 43<br>22 |

Tableau 10 (suite)

| *Propriétés après cuisson:* | | | |
|---|---|---|---|
| M10 (MPa) | 4.8 | 3.7 | 3.3 |
| M100 (MPa) | 3.0 | 2.2 | 2.2 |
| M300 (MPa) | 5.2 | 4.0 | 4.8 |
| M300/M100 | 1.7 | 1.8 | 2.1 |
| PH | 19.0 | 19.1 | 16.8 |
| ΔG* (MPa) | 1.8 | 1.7 | 1.0 |
| $tan(\delta)_{max}$ | 0.18 | 0.18 | 0.14 |
| contrainte rupture (MPa) | 29 | 27 | 28 |
| allongement rupture (%) | 644 | 680 | 660 |

Tableau 11

| Composition N°: | 19 | 20 |
|---|---|---|
| NR (1) | 100 | 100 |
| silice (2) | 50 | 50 |
| silane (4) | 3.7 | 3.7 |
| AIBN (15) | - | 0.5 |
| ZnO | 3 | 3 |
| acide stéarique | 2.5 | 2.5 |
| anti-oxydant (6) | 1.9 | 1.9 |
| soufre | 1.5 | 1.5 |
| CBS (7) | 1.8 | 1.8 |

(1) à (7) idem tableau 1;

(15) 1,1'-azobis(isobutyronitrile) de formule (III-2) ; Vazo 64 de la société Du Pont de Nemours.

Tableau 12

| Composition N°: | 19 | 20 |
|---|---|---|
| *Propriétés avant cuisson:* | | |
| Mooney (UM) | 48 | 58 |
| T5 (min) | 30 | 30 |
| *Propriétés après cuisson:* | | |
| M10 (MPa) | 4.3 | 3.9 |
| M100 (MPa) | 2.3 | 2.5 |
| M300(MPa) | 4.8 | 6.1 |
| M300/M100 | 2.1 | 2.5 |
| PH | 24.0 | 20.3 |
| ΔG* (MPa) | 2.2 | 1.5 |
| $tan(\delta)_{max}$ | 0.22 | 0.19 |
| contrainte rupture (MPa) | 28 | 28 |
| allongement rupture (%) | 673 | 595 |

## Revendications

1. Composition de caoutchouc vulcanisable au soufre et utilisable pour la fabrication de pneumatiques, à base d'au moins:

   (A) - un élastomère diénique choisi dans le groupe constitué par les polybutadiènes, le caoutchouc naturel, les polyisoprènes de synthèse, les copolymères de butadiène, les copolymères d'isoprène et les mélanges de ces élastomères (composant A);
   (B) - une charge blanche renforçante (composant B);
   (C) - un agent de couplage (charge blanche/élastomère diénique) porteur d'au moins une double liaison éthylénique activée (composant C), auquel est associé :
   (D) - entre 0,05 et 1 pce (parties en poids pour cent d'élastomère) d'un initiateur radicalaire à amorçage thermique (composant D).

2. Composition de caoutchouc selon la revendication 1, dans laquelle le composant A est choisi dans le groupe constitué par les polybutadiènes, le caoutchouc naturel, les polyisoprènes de synthèse, les copolymères de butadiène-styrène, les copolymères de butadiène-isoprène, les copolymères d'isoprène-styrène, les copolymères de butadiène-styrène-isoprène et les mélanges de ces élastomères.

3. Composition de caoutchouc selon la revendication 2, dans laquelle le composant A est choisi majoritairement dans le groupe constitué par le caoutchouc naturel, les polyisoprènes de synthèse, les copolymères d'isoprène et les mélanges de ces élastomères.

4. Composition de caoutchouc selon l'une quelconque des revendications 1 à 3, contenant entre 10 et 200 pce de composant B.

5. Composition de caoutchouc selon l'une quelconque des revendications 1 à 4, dans laquelle la quantité de composant C représente entre 0,5% et 20% par rapport au poids de composant B.

6. Composition de caoutchouc selon la revendication 5, dans laquelle la quantité de composant C représente moins de 10% par rapport au poids de composant B.

7. Composition de caoutchouc selon l'une quelconque des revendications 1 à 6, dans laquelle la quantité de composant D est inférieure à 0,5 pce.

8. Composition de caoutchouc selon la revendication 7, dans laquelle la quantité de composant D est comprise entre 0,1 et 0,3 pce.

9. Composition de caoutchouc selon l'une quelconque des revendications 1 à 8, dans laquelle la double liaison éthylénique du composant C est activée par au moins un groupe électro-attracteur adjacent choisi parmi les radicaux porteurs d'au moins une des liaisons C=O, C=C, C≡C, OH, OR (R alkyle) ou OAr (Ar aryle), ou d'au moins un atome de soufre et/ou d'azote, ou d'au moins un halogène.

10. Composition de caoutchouc selon la revendication 9, dans laquelle le groupe électro-attracteur adjacent est choisi parmi les radicaux acyles (-COR), carbonyles (>C=O), carboxyle (-COOH), carboxy-esters (-COOR), carbamyles (-CO-NH2 ; -CO-NH-R ; $-CO-N-R_2$), alkoxy (-OR), aryloxy (-OAr), hydroxy (-OH), alcényles (-CH=CHR), alcynyles (-C≡CR), napthyle ($C_{10}H_7$-), phényle ($C_6H_5$-), les radicaux porteurs d'au moins un atome de soufre (S) et/ou d'azote (N), ou d'au moins un halogène.

11. Composition de caoutchouc selon la revendication 10, dans laquelle le groupe électro-attracteur adjacent est un groupe carbonyle (>C=O).

12. Composition de caoutchouc selon l'une quelconque des revendications 1 à 11, dans laquelle le composant C est un alkoxysilane répondant à la formule générale:

(I) Z-T-Y,

dans laquelle:

- Z est un groupement porteur de la double liaison éthylénique activée;
- T est un groupe hydrocarboné divalent;
- Y répond à l'une des formules ci-après:

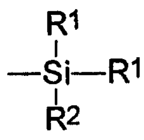 ; 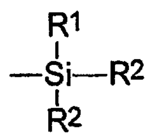 ; 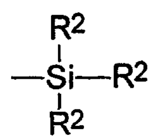 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$;
- les radicaux $R^2$, substitués ou non substitués, identiques ou différents entre eux, représentent un groupe alkoxyle en $C_1$-$C_{18}$ ou cycloalkoxyle en $C_5$-$C_{18}$.

**13.** Composition de caoutchouc selon la revendication 12, dans laquelle le groupement Z est choisi parmi les structures de formules:

(Z-1) 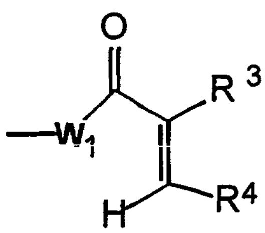 ,

(Z-2) 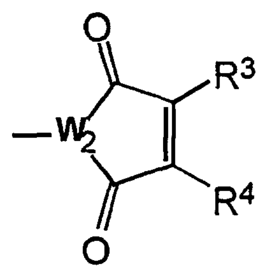

(Z-3) 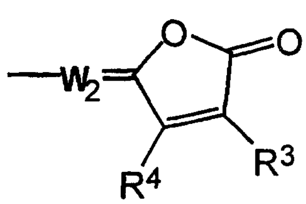

dans lesquelles les symboles utilisés ont les significations suivantes:

- $W_1$ est O, NH, S ou $CH_2$;
- $W_2$ est N ou CH;
- les radicaux $R^3$ et $R^4$, identiques ou différents entre eux, représentent l'hydrogène, un alkyle en $C_1$-$C_6$, substitué ou non substitué, ou un halogène, avec la réserve que lorsque $R^4$ est le groupe COOH, $R^3$ est un atome d'hydrogène.

**14.** Composition de caoutchouc selon les revendications 12 ou 13, dans laquelle le composant C est un alkoxy($C_1$-$C_4$)-silylpropyle-silane.

**15.** Composition de caoutchouc selon la revendication 14, dans laquelle le composant C est choisi dans le groupe constitué par les acrylates d'alkoxy($C_1$-$C_4$)-silylpropyle, les méthacrylates d'alkoxy($C_1$-$C_4$)-silylpropyle, les acrylamides d'alkoxy($C_1$-$C_4$)-silylpropyle, les méthacrylamides d'alkoxy($C_1$-$C_4$)-silylpropyle, les maléimides d'alkoxy ($C_1$-$C_4$)-silylpropyle, les isomaléimides d'alkoxy($C_1$-$C_4$)-silylpropyle, les acides N-(propyl-alkoxysilane) maléamiques, les acides N-(propyl-alkoxysilane) fumaramiques et les mélanges de ces composés.

**16.** Composition de caoutchouc selon la revendication 15, dans laquelle le composant C est le méthacrylate de triméthoxy-silylpropyle, de formule:

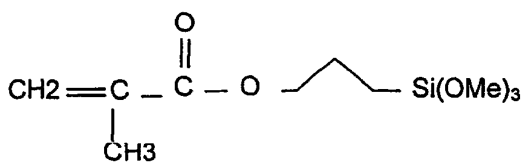

**17.** Composition de caoutchouc selon la revendication 15, dans laquelle le composant C est l'acide N-(propyltriéthoxysilane) maléamique, de formule:

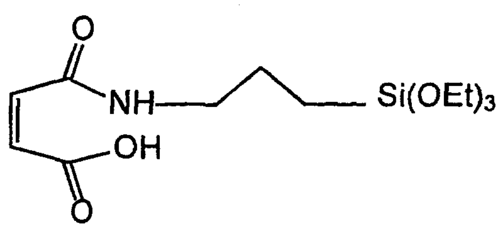

**18.** Composition de caoutchouc selon la revendication 15, dans laquelle le composant C est l'isomaléimide de N-(propyltriéthoxysilane), de formule:

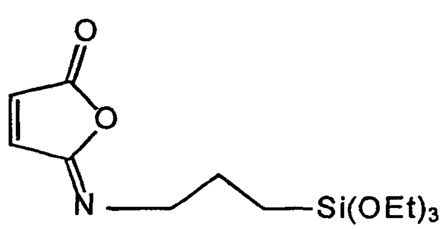

**19.** Composition de caoutchouc selon l'une quelconque des revendications 1 à 18, dans laquelle le composant D est choisi dans le groupe constitué par les peroxydes, les hydroperoxydes, les composés azido, les composés bis (azo), les peracides, les peresters et les mélanges de ces composés.

**20.** Composition de caoutchouc selon la revendication 19, dans laquelle le composant D est le peroxyde de 1,1 bis(t-butyl)3,3,5-triméthylcyclohexane de formule (Me=méthyle):

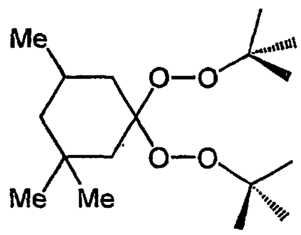

**21.** Composition de caoutchouc selon la revendication 19, dans laquelle le composant D est l'azobis(isobutyronitrile) répondant à la formule:

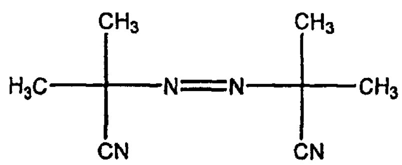

**22.** Composition de caoutchouc selon l'une quelconque des revendications 1 à 21, dans laquelle le composant B est majoritairement de la silice.

**23.** Composition de caoutchouc selon l'une quelconque des revendications 1 à 21, dans laquelle le composant B est majoritairement de l'alumine.

**24.** Composition de caoutchouc selon l'une quelconque des revendications 1 à 23, dans laquelle le composant B constitue la totalité de la charge renforçante.

**25.** Composition de caoutchouc selon l'une quelconque des revendications 1 à 23, dans laquelle le composant B est utilisé en mélange avec du noir de carbone.

**26.** Composition de caoutchouc selon l'une quelconque des revendications 3 à 25, dans laquelle le composant A est constitué majoritairement de caoutchouc naturel, de polyisoprène de synthèse ou d'un mélange de ces élastomères.

**27.** Composition de caoutchouc selon la revendication 26, dans laquelle le composant A est constitué exclusivement de caoutchouc naturel ou de polyisoprène de synthèse.

**28.** Procédé pour préparer une composition de caoutchouc utilisable pour la fabrication de pneumatiques, **caractérisé en ce qu'**on incorpore à au moins (i) un élastomère diénique choisi dans le groupe constitué par les polybutadiènes, le caoutchouc naturel, les polyisoprènes de synthèse, les copolymères de butadiène, les copolymères d'isoprène et les mélanges de ces élastomères (composant A), au moins:

(ii) - une charge blanche à titre de charge renforçante (composant B);
(iii) - un agent de couplage (charge blanche/élastomère diénique) porteur d'au moins une double liaison éthylénique activée (composant C), auquel est associé:
(iv) - entre 0,05 et 1 pce (parties en poids pour cent d'élastomère) d'un initiateur radicalaire à amorçage thermique (composant D),

et **en ce qu'**on malaxe thermomécaniquement le tout, en une ou plusieurs étapes, jusqu'à atteindre une température maximale comprise entre 110°C et 190°C.

**29.** Procédé selon la revendication 28, **caractérisé en ce que** la température maximale de malaxage est comprise entre 130°C et 180°C.

**30.** Utilisation d'une composition de caoutchouc conforme à l'une quelconque des revendications 1 à 27, pour la fabrication de pneumatiques ou de produits semi-finis destinés aux pneumatiques, ces produits semi-finis étant choisis en particulier dans le groupe constitué par les bandes de roulement, les sous-couches de ces bandes de roulement, les nappes sommet, les flancs, les nappes carcasse, les talons, les protecteurs, les chambres à air et les gommes intérieures étanches pour pneu sans chambre.

**31.** Pneumatique comportant une composition de caoutchouc conforme à l'une quelconque des revendications 1 à 27.

**32.** Produit semi-fini pour pneumatique, comportant une composition de caoutchouc conforme à l'une quelconque des revendications 1 à 27, ce produit étant choisi en particulier dans le groupe constitué par les bandes de roulement, les sous-couches de ces bandes de roulement, les nappes sommet, les flancs, les nappes carcasse, les talons, les protecteurs, les chambres à air et les gommes intérieures étanches pour pneu sans chambre.

**33.** Produit semi-fini selon la revendication 32 consistant en une bande de roulement de pneumatique.

**34.** Bande de roulement de pneumatique selon la revendication 33, **caractérisée en ce qu'**elle est à base d'une composition de caoutchouc selon les revendications 26 ou 27.

**35.** Utilisation d'un initiateur radicalaire à amorçage thermique comme activateur de couplage (charge blanche/élastomère diénique) d'un agent de couplage à double liaison éthylénique activée, dans une composition de caoutchouc à base d'élastomère diénique renforcée d'une charge blanche, ledit élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

**36.** Utilisation selon la revendication 35, **caractérisée en ce que** l'initiateur radicalaire est présent à un taux compris entre 0,05 et 1 pce (parties en poids pour cent d'élastomère).

**37.** Procédé pour activer, dans une composition de caoutchouc vulcanisable au soufre à base d'élastomère diénique et renforcée d'une charge blanche, la fonction de couplage (charge blanche/élastomère diénique) d'un agent de couplage à double liaison éthylénique activée, **caractérisé en ce qu'**on incorpore par malaxage à au moins (i) un élastomère diénique choisi dans le groupe constitué les polybutadiènes, le caoutchouc naturel, les polyisoprènes de synthèse, les copolymères de butadiène, les copolymères d'isoprène et les mélanges de ces élastomères (composant A), au moins:

(ii) - une charge blanche à titre de charge renforçante (composant B);
(iii) - un agent de couplage (charge blanche/élastomère diénique) porteur d'au moins une double liaison éthylénique activée (composant C), auquel est associé :
(iv) - entre 0,05 et 1 pce (parties en poids pour cent d'élastomère) d'un initiateur radicalaire à amorçage thermique (composant D),

et **en ce qu'**on malaxe thermomécaniquement le tout, en une ou plusieurs étapes, jusqu'à atteindre une température maximale comprise entre 110°C et 190°C.

**38.** Procédé selon la revendication 37, dans lequel la température maximale de malaxage est comprise entre 130°C et 180°C.

**39.** Procédé selon les revendications 37 ou 38, dans lequel l'initiateur radicalaire est présent à un taux inférieur à 0,5 pce.

## Patentansprüche

**1.** Mit Schwefel vulkanisierbare Kautschukmischung, die für die Herstellung von Luftreifen verwendbar ist, auf der Basis von zumindest:

(A) einem Dienelastomer, das unter den Polybutadienen, Naturkautschuk, synthetischen Polyisoprenen, Butadien-Copolymeren, Isopren-Copolymeren und Gemischen dieser Elastomere ausgewählt ist (Komponente A);
(B) einem verstärkenden hellen Füllstoff (Komponente B);

(C) einem Kupplungsmittel (heller Füllstoff/Dienelastomer), das mindestens eine aktivierte ethylenische Doppelbindung aufweist (Komponente C), mit dem kombiniert werden:
(D) 0,05 bis 1 pce (Gewichtsteile auf 100 Teile Elastomer) eines thermisch initiierbaren Radikalstarters (Komponente D).

2. Kautschukmischung nach Anspruch 1, wobei die Komponente A unter den Polybutadienen, Naturkautschuk, synthetischen Polyisoprenen, Butadien/Styrol-Copolymeren, Butadien/Isopren-Copolymeren, Isopren/Styrol-Copolymeren, Butadien/Styrol/Isopren-Copolymeren und den Gemischen dieser Elastomere ausgewählt ist.

3. Kautschukmischung nach Anspruch 2, wobei die Komponente A hauptsächlich unter Naturkautschuk, synthetischen Polyisoprenen, Isopren-Copolymeren und Gemischen dieser Elastomere ausgewählt ist.

4. Kautschukmischung nach einem der Ansprüche 1 bis 4, die 10 bis 200 pce Komponente B enthält.

5. Kautschukmischung nach einem der Ansprüche 1 bis 4, wobei der Mengenanteil der Komponente C 0,5 bis 20 %, bezogen auf das Gewicht der Komponente B, ausmacht.

6. Kautschukmischung nach Anspruch 5, wobei der Mengenanteil der Komponente C weniger als 10 %, bezogen auf das Gewicht der Komponente B, ausmacht.

7. Kautschukmischung nach einem der Ansprüche 1 bis 6, wobei die Menge der Komponente D unter 0,5 pce liegt.

8. Kautschukmischung nach Anspruch 7, wobei die Menge der Komponente D im Bereich von 0,1 bis 0,3 pce liegt.

9. Kautschukmischung nach einem der Ansprüche 1 bis 8, wobei die ethylenische Doppelbindung der Komponente C mit mindestens einer angrenzenden elektronenziehenden Gruppe aktiviert ist, die unter den Gruppen ausgewählt ist, die mindestens eine Bindung C=O, C=C, C≡C, OH, OR (R Alkyl) oder OAr (Ar Aryl) oder mindestens ein Schwefelatom und/oder Stickstoffatom oder mindestens ein Halogenatom enthalten.

10. Kautschukmischung nach Anspruch 9, wobei die elektronenziehende angrenzende Gruppe unter den Gruppen Acyl (-COR), Carbonyl (>C=O), Carboxy (-COOH), Carboxyester (-COOR), Carbamoyl ($-CO-NH_2$; -CO-NH-R; $-CO-N-R_2$), Alkoxy (-OR), Aryloxy (-OAr), Hydroxy (-OH), Alkenyl (-CH=CHR), Alkinyl (-C≡CR), Naphthyl ($C_{10}H_7$-), Phenyl ($C_6H_5$-), den Gruppen, die mindestens ein Schwefelatom (S) und/oder Stickstoffatom (N) enthalten, oder den Gruppen mit mindestens einem Halogen ausgewählt ist.

11. Kautschukmischung nach Anspruch 10, wobei die angrenzende elektronenziehende Gruppe eine Carbonylgruppe (>C=O) ist.

12. Kautschukmischung nach einem der Ansprüche 1 bis 11, wobei die Komponente C ein Alkoxysilan der folgenden allgemeinen Formel ist:

(I) Z-T-Y,

worin bedeuten:

- Z eine Gruppe, die die aktivierte ethylenische Doppelbindung enthält;
- T eine zweiwertige Kohlenwasserstoffgruppe; und
- Y eine Gruppe der nachfolgenden Formeln:

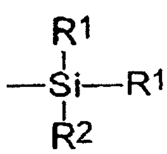 ; 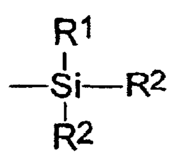 ; 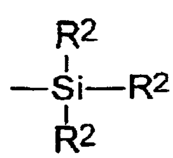 ,

worin bedeuten:

- die Gruppen $R^1$, die substituiert oder unsubstituiert und identisch oder voneinander verschieden sind, eine $C_{1-18}$-Alkylgruppe, eine $C_{5-18}$-Cycloalkylgruppe oder eine $C_{6-18}$-Arylgruppe; und
- die Gruppen $R^2$, die substituiert oder unsubstituiert und gleich oder verschieden sind, eine $C_{1-18}$-Alkoxygruppe oder eine $C_{5-18}$-Cycloalkoxygruppe.

**13.** Kautschukmischung nach Anspruch 12, wobei die Gruppe Z unter den folgenden Strukturen ausgewählt ist:

(Z-1) 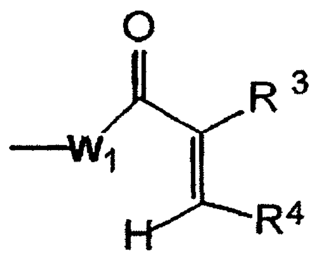

(Z-2) 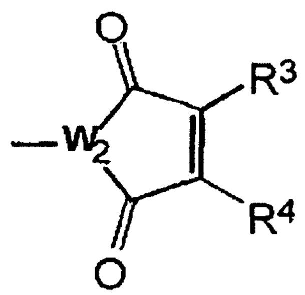

(Z-3) 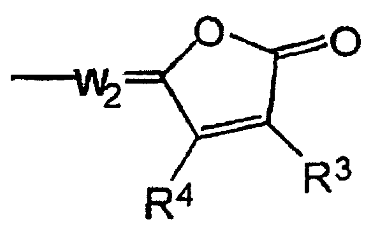

wobei die in diesen Formeln verwendeten Symbole die folgenden Bedeutungen haben:

- $W_1$ O, NH, S oder $CH_2$;
- $W_2$ N oder CH; und
- die Gruppen $R^3$ und $R^4$, die gleich oder verschieden sind, Wasserstoff, eine substituierte oder unsubstituierte $C_{1-6}$-Alkylgruppe oder ein Halogen, mit der Maßgabe, dass $R^3$ Wasserstoff bedeutet, wenn $R^4$ die COOH-Gruppe ist.

**14.** Kautschukmischung nach Anspruch 12 oder 13, wobei die Komponente C ein $C_{1-4}$-Alkoxysilylpropylsilan ist.

**15.** Kautschukmischung nach Anspruch 14, wobei die Komponente C unter den $C_{1-4}$-Alkoxysilylpropylacrylaten, $C_{1-4}$-Alkoxysilylpropylmethacrylaten, $C_{1-4}$-Alkoxysilylpropylacrylamiden, $C_{1-4}$-Alkoxysilylpropylmethacrylamiden, $C_{1-4}$-Alkoxysilylpropylmaleimiden, $C_{1-4}$-Alkoxysilylpropylisomaleimiden, N-(Propylalkoxysilan)-maleamsäuren, N-(Propylalkoxysilan)-fumaramsäuren und den Gemischen dieser Verbindungen ausgewählt ist.

**16.** Kautschukmischung nach Anspruch 15, wobei die Komponente C das Trimethoxysilylpropylmethacrylat der folgenden Formel ist:

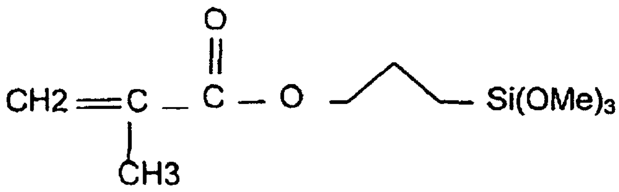

**17.** Kautschukmischung nach Anspruch 15, wobei die Komponente C die N-(Propyltriethoxysilan)-maleamsäure der folgenden Formel ist:

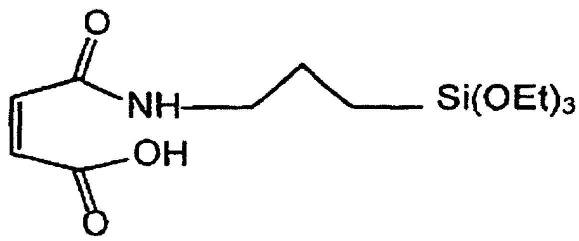

**18.** Kautschukmischung nach Anspruch 15, wobei die Komponente C das N-(Propyltriethoxysilan)-isomaleimid der folgenden Formel ist:

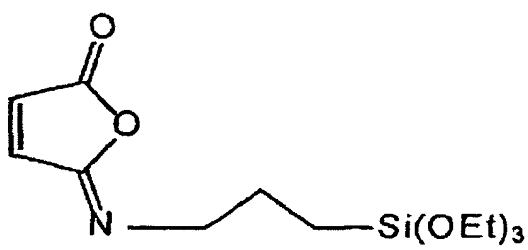

**19.** Kautschukmischung nach einem der Ansprüche 1 bis 18, wobei die Komponente D unter den Peroxiden, Hydroperoxiden, Azidoverbindungen, Bis(azo)verbindungen, Persäuren, Estern von Persäuren und den Gemischen dieser Verbindungen ausgewählt ist.

**20.** Kautschukmischung nach Anspruch 19, wobei die Komponente D das 1,1-Bis(t-butyl)-3,3,5-trimethylcyclohexanperoxid der folgenden Formel ist (Me = Methyl):

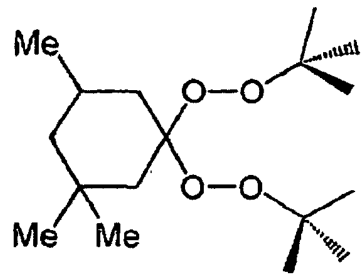

**21.** Kautschukmischung nach Anspruch 19, wobei die Komponente D das Azobis(isobutyronitril) der folgenden Formel ist:

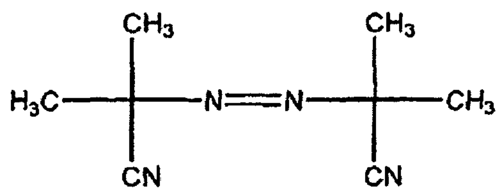

**22.** Kautschukmischung nach einem der Ansprüche 1 bis 21, wobei die Komponente B hauptsächlich aus Kieselsäure besteht.

**23.** Kautschukmischung nach einem der Ansprüche 1 bis 21, wobei die Komponente B hauptsächlich aus Aluminiumoxid besteht.

**24.** Kautschukmischung nach einem der Ansprüche 1 bis 23, wobei die Komponente B den gesamten verstärkenden Füllstoff ausmacht.

**25.** Kautschukmischung nach einem der Ansprüche 1 bis 23, wobei die Komponente B im Gemisch mit Ruß verwendet wird.

**26.** Kautschukmischung nach einem der Ansprüche 3 bis 25, wobei die Komponente A hauptsächlich aus Naturkautschuk, einem synthetischen Polyisopren oder einem Gemisch dieser Elastomere besteht.

**27.** Kautschukmischung nach Anspruch 26, wobei die Komponente A ausschließlich aus Naturkautschuk oder einem synthetischen Polyisopren besteht.

**28.** Verfahren zur Herstellung einer Kautschukmischung, die für die Herstellung von Luftreifen verwendbar ist, **dadurch gekennzeichnet, dass** in (i) mindestens ein Dienelastomer, das unter den Polybutadienen, Naturkautschuk, synthetischen Polyisoprenen, Butadien-Copolymeren, Isopren-Copolymeren und Gemischen dieser Elastomere ausgewählt ist (Komponente A), mindestens eingearbeitet werden:

(ii) ein heller Füllstoff als verstärkender Füllstoff (Komponente B);
(iii) ein Kupplungsmittel (heller Füllstoff/Dienelastomer), das mindestens eine aktivierte ethylenische Doppelbindung aufweist (Komponente C), mit der kombiniert sind:
(iv) 0,05 bis 1 pce (Gewichtsteile auf 100 Teile Elastomer) eines thermisch initiierbaren Radikalstarters (Komponente D),

und dadurch, dass das Ganze bis zum Erreichen einer Maximaltemperatur von 110 bis 190 °C in einem oder mehreren Schritten thermomechanisch bearbeitet wird.

**29.** Verfahren nach Anspruch 28, **dadurch gekennzeichnet, dass** die Maximaltemperatur beim Kneten im Bereich

von 130 bis 180 °C liegt.

**30.** Verwendung einer Kautschukmischung nach einem der Ansprüche 1 bis 27 zur Herstellung von Luftreifen oder Halbfertigprodukten für Luftreifen, wobei die Halbfertigprodukte insbesondere unter den Laufstreifen, den Unterschichten für diese Laufstreifen, Scheitellagen, Seitenwänden, Karkassenlagen, Wülsten, Protektoren, Schläuchen und dichten Innengummis für schlauchlose Reifen ausgewählt sind.

**31.** Luftreifen, der eine Kautschukmischung nach einem der Ansprüche 1 bis 27 enthält.

**32.** Halbfertigprodukt für Luftreifen, das eine Kautschukmischung nach einem der Ansprüche 1 bis 27 enthält, wobei dieses Produkt insbesondere unter den Laufstreifen, Unterschichten für diese Laufstreifen, Scheitellagen, Seitenwänden, Karkassenlagen, Wülsten, Protektoren, Schläuchen und dichten Innengummis für schlauchlose Reifen ausgewählt ist.

**33.** Halbfertigprodukt nach Anspruch 32, bei dem es sich um einen Laufstreifen für Luftreifen handelt.

**34.** Laufstreifen für Luftreifen nach Anspruch 33, **dadurch gekennzeichnet, dass** er auf einer Kautschukmischung nach einem der Ansprüche 26 oder 27 basiert.

**35.** Verwendung eines thermisch initiierbaren Radikalstarters als Aktivator für die Kupplung (heller Füllstoff/Dienelastomer) eines Kupplungsmittels mit aktivierter ethylenischer Doppelbindung in einer Kautschukmischung auf der Basis eines Dienelastomers, die mit einem hellen Füllstoff verstärkt ist, wobei das Dienelastomer unter den Polybutadienen, Naturkautschuk, synthetischen Polyisoprenen, Butadien-Copolymeren, Isopren-Copolymeren und den Gemischen dieser Elastomere ausgewählt ist.

**36.** Verwendung nach Anspruch 35, **dadurch gekennzeichnet, dass** der radikalische Initiator in einem Gehalt von 0,05 bis 1 pce (Gewichtsteile auf 100 Teile Elastomer) vorliegt.

**37.** Verfahren zur Aktivierung der Kupplungsfunktion (heller Füllstoff/Dienelastomer) eines Kupplungsmittels mit aktivierter ethylenischer Doppelbindung in einer mit Schwefel vulkanisierbaren Kautschukmischung auf der Basis eines Dienelastomers, die mit einem hellen Füllstoff verstärkt ist, **dadurch gekennzeichnet, dass** durch Kneten in zumindest (i) ein Dienelastomer, das unter den Polybutadienen, Naturkautschuk, synthetischen Isoprenen, Butadien-Copolymeren, Isopren-Copolymeren und den Gemischen dieser Elastomere ausgewählt ist (Komponente A) zumindest eingearbeitet werden:

(ii) ein heller Füllstoff als verstärkender Füllstoff (Komponente B);
(iii) ein Kupplungsmittel (heller Füllstoff/Dienelastomer), das mindestens eine aktivierte ethylenische Doppelbindung aufweist (Komponente C), mit dem kombiniert werden:
(iv) 0,05 bis 1 pce (Gewichtsteile auf 100 Gewichtsteile Elastomer) eines thermisch initiierbaren Radikalstarters (Komponente D),

und dadurch, dass das Ganze bis zum Erreichen einer Maximaltemperatur von 110 bis 190 °C in einem oder mehreren Schritten thermomechanisch geknetet wird.

**38.** Verfahren nach Anspruch 37, wobei die Maximaltemperatur beim Kneten im Bereich von 130 bis 180 °C liegt.

**39.** Verfahren nach den Ansprüchen 37 oder 38, wobei der radikalische Initiator in einem Gehalt unter 0,5 pce vorliegt.

## Claims

**1.** A sulphur-vulcanisable rubber composition usable for the manufacture of tyres, based on at least:

(A) - one diene elastomer selected from the group consisting of polybutadienes, natural rubber, synthetic polyisoprenes, butadiene copolymers, isoprene copolymers and mixtures of these elastomers (component A);
(B) - a reinforcing white filler (component B);
(C) - a coupling agent (white filler/diene elastomer) bearing at least one activated double ethylene bond (component C), with which there is associated:

(D) - between 0.05 and 1 phr (parts by weight per hundred of elastomer) of a heat-triggered radical initiator (component D).

**2.** A rubber composition according to Claim 1, in which component A is selected from the group which consists of polybutadienes, natural rubber, synthetic polyisoprenes, butadiene-styrene copolymers, butadiene-isoprene copolymers, isoprene-styrene copolymers, butadiene-styrene-isoprene copolymers, and mixtures of these elastomers.

**3.** A rubber composition according to Claim 2, in which component A is selected majoritarily from the group which consists of natural rubber, synthetic polyisoprenes, isoprene copolymers and mixtures of these elastomers.

**4.** A rubber composition according to any one of Claims 1 to 3, containing between 10 and 200 phr of component B.

**5.** A rubber composition according to any one of Claims 1 to 4, in which the quantity of component C represents between 0.5 and 20% relative to the weight of component B.

**6.** A rubber composition according to Claim 5, in which the quantity of component C represents less than 10% relative to the weight of component B.

**7.** A rubber composition according to any one of Claims 1 to 6, in which the quantity of component D is less than 0.5 phr.

**8.** A rubber composition according to Claim 7, in which the quantity of component D is between 0.1 and 0.3 phr.

**9.** A rubber composition according to any one of Claims 1 to 8, in which the double ethylene bond of component C is activated by at least one adjacent electron-attracting group selected from among the radicals bearing at least one of the bonds C=O, C=C, C≡C, OH, OR (R alkyl) or OAr (Ar aryl), or at least one atom of sulphur and/or nitrogen, or at least one halogen.

**10.** A rubber composition according to Claim 9, in which the adjacent electron-attracting group is selected from among the radicals acyl (-COR), carbonyl (>C=O), carboxyl (-COOH), carboxy-ester (-COOR), carbamyl (-CO-NH2; -CO-NH-R; -CO-N-$R_2$), alkoxy (-OR), aryloxy (-OAr), hydroxy (-OH), alkenyl (-CH=CHR), alkynyl (-C≡CR), naphthyl ($C_{10}H_7$-), phenyl ($C_6H_5$-), radicals bearing at least one sulphur (S) and/or nitrogen (N) atom, or at least one halogen.

**11.** A rubber composition according to Claim 10, in which the electron-attracting group is a carbonyl (>C=O) group.

**12.** A rubber composition according to any one of Claims 1 to 11, in which component C is an alkoxysilane of the general formula:

(I) Z-T-Y,

in which:

- Z is a group bearing the activated double ethylene bond;
- T is a divalent hydrocarbon radical;
- Y corresponds to one of the formulae below:

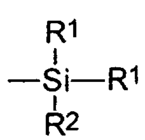 ; 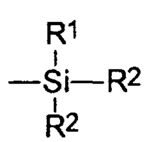 ; 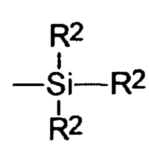 ,

in which:

- the radicals $R^1$, which may or may not be substituted, and may be identical or different, represent a $C_1$-$C_{18}$ alkyl group, a $C_5$-$C_{18}$ cycloalkyl group, or a $C_6$-$C_{18}$ aryl group;
- the radicals $R^2$, which may or may not be substituted, and may be identical or different, represent a $C_1$-$C_{18}$ alkoxyl group or a $C_5$-$C_{18}$ cycloalkoxyl group.

**13.** A rubber composition according to Claim 12, in which the group Z is selected from the structural formulae:

(Z-1) 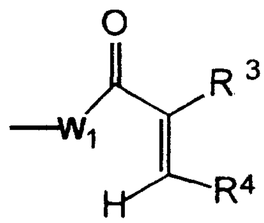

(Z-2) 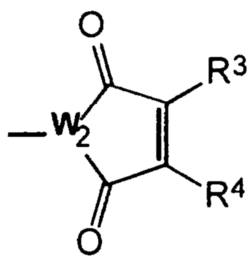

(Z-3) 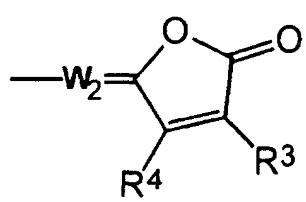

in which the symbols used have the following meanings:

- $W_1$ is O, NH, S or $CH_2$;
- $W_2$ is N or CH;
- the radicals $R^3$ and $R^4$, which may be identical or different, represent hydrogen, a $C_1$-$C_6$ alkyl, whether substituted or non-substituted, or a halogen, with the proviso that when $R^4$ is the COOH group, $R^3$ is a hydrogen atom.

**14.** A rubber composition according to Claims 12 or 13, in which component C is an alkoxy($C_1$-$C_4$)-silylpropyl-silane.

**15.** A rubber composition according to Claim 14, in which component C is selected from the group formed by alkoxy ($C_1$-$C_4$)-silylpropyl acrylates, alkoxy($C_1$-$C_4$)-silylpropyl methacrylates, alkoxy($C_1$-$C_4$)-silylpropyl acrylamides, alkoxy($C_1$-$C_4$)-silylpropyl methacrylamides, alkoxy($C_1$-$C_4$)-silylpropyl maleimides, alkoxy($C_1$-$C_4$)-silylpropyl isomaleimides, N-(propyl-alkoxysilane) maleamic acids, N-(propyl-alkoxysilane) fumaramic acids, and mixtures of these compounds.

**16.** A rubber composition according to Claim 15, in which component C is trimethoxysilylpropyl methacrylate, of formula:

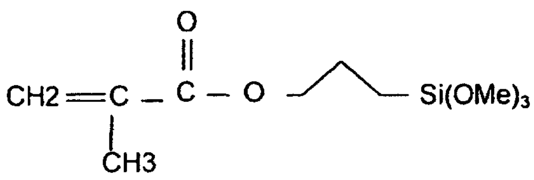

**17.** A rubber composition according to Claim 15, in which component C is N-(propyltriethoxysilane) maleamic acid, of the formula:

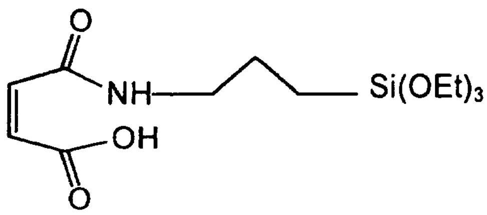

**18.** A rubber composition according to Claim 15, in which component C is N-(propyltriethoxysilane) isomaleimide, of the formula:

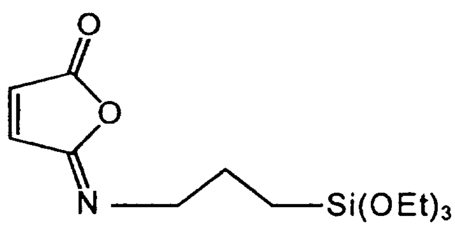

**19.** A rubber composition according to any one of Claims 1 to 18, in which component D is selected from the group consisting of peroxides, hydroperoxides, azido compounds, bis(azo) compounds, peracids, peresters and mixtures of these compounds.

**20.** A rubber composition according to Claim 19, in which component D is 1,1-bis(tert.-butyl)3,3,5-trimethylcyclohexane of formula (Me = methyl):

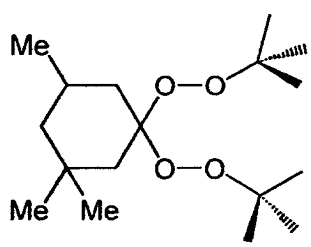

**21.** A rubber composition according to Claim 19, in which component D is azobis(isobutyronitrile) of the formula:

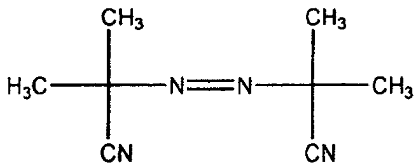

.

**22.** A rubber composition according to any one of Claims 1 to 21, in which component B is majoritarily silica.

**23.** A rubber composition according to any one of Claims 1 to 21, in which component B is majoritarily alumina.

**24.** A rubber composition according to any one of Claims 1 to 23, in which component B constitutes the entire reinforcing filler.

**25.** A rubber composition according to any one of Claims I to 23, in which component B is used in a mixture with carbon black.

**26.** A rubber composition according to any one of Claims 3 to 25, in which component A is formed majoritarily of natural rubber, synthetic polyisoprene or a mixture of these elastomers.

**27.** A rubber composition according to Claim 26, in which component A is formed exclusively of natural rubber or synthetic polyisoprene.

**28.** A process for preparing a rubber composition usable for the manufacture of tyres, **characterised in that** there is incorporated in at least (i) one diene elastomer selected from the group consisting of polybutadienes, natural rubber, synthetic polyisoprenes, butadiene copolymers, isoprene copolymers and mixtures of these elastomers (component A), at least:

(ii) - a white filler as reinforcing filler (component B);
(iii) - a coupling agent (white filler/diene elastomer) bearing at least one activated double ethylene bond (component C), with which there is associated:
(iv) - between 0.05 and 1 phr (parts by weight per hundred of elastomer) of a heat-triggered radical initiator (component D),

and **in that** the entire mixture is kneaded thermomechanically, in one or more stages, until a maximum temperature of between 110°C and 190°C is reached.

**29.** A process according to Claim 28, **characterised in that** the maximum kneading temperature is between 130°C and 180°C.

**30.** The use of a rubber composition according to any one of Claims 1 to 27 for the manufacture of tyres or semi-finished products intended for tyres, these semi-finished products being selected in particular from the group comprising treads, underlayers for such treads, crown plies, sidewalls, carcass plies, beads, protectors, inner tubes and airtight internal rubbers for tubeless tyres.

**31.** A tyre comprising a rubber composition according to any one of Claims 1 to 27.

**32.** A semi-finished product for tyres, comprising a rubber composition according to any one of Claims 1 to 27, this product being selected in particular from among the group comprising treads, underlayers for these treads, crown plies, sidewalls, carcass plies, beads, protectors, inner tubes and airtight internal rubbers for tubeless tyres.

**33.** A semi-finished product according to Claim 32, consisting of a tyre tread.

**34.** A tyre tread according to Claim 33, **characterised in that** it is based on a rubber composition according to Claims 26 or 27.

**35.** The use of a heat-triggered radical initiator as coupling activator (white filler/diene elastomer) of a coupling agent

having an activated double ethylene bond, in a rubber composition based on diene elastomer which is reinforced with a white filler, said diene elastomer being selected from the group consisting of polybutadienes, natural rubber, synthetic polyisoprenes, butadiene copolymers, isoprene copolymers and mixtures of these elastomers.

**36.** The use according to Claim 35, **characterised in that** the radical initiator is present in an amount of between 0.05 and 1 phr (parts by weight per hundred of elastomer).

**37.** A process for activating, in a sulphur-vulcanisable rubber composition based on diene elastomer and reinforced with a white filler, the coupling function (white filler/diene elastomer) of a coupling agent having an activated double ethylene bond, **characterised in that** there is incorporated by kneading in at least (i) one diene elastomer selected from the group consisting of polybutadienes, natural rubber, synthetic polyisoprenes, butadiene copolymers, isoprene copolymers and mixtures of these elastomers (component A), at least:

(ii) - a white filler as reinforcing filler (component B);
(iii) - a coupling agent (white filler/diene elastomer) bearing at least one activated double ethylene bond (component C), with which there is associated:
(iv) - between 0.05 and 1 phr (parts by weight per hundred of elastomer) of a heat-triggered radical initiator (component D),

and **in that** the entire mixture is kneaded thermomechanically, in one or more stages, until a maximum temperature of between 110°C and 190°C is reached.

**38.** A process according to Claim 37, in which the maximum kneading temperature is between 130°C and 180°C.

**39.** A process according to Claims 37 or 38, in which the radical initiator is present in an amount of less than 0.5 phr.

Figure 1

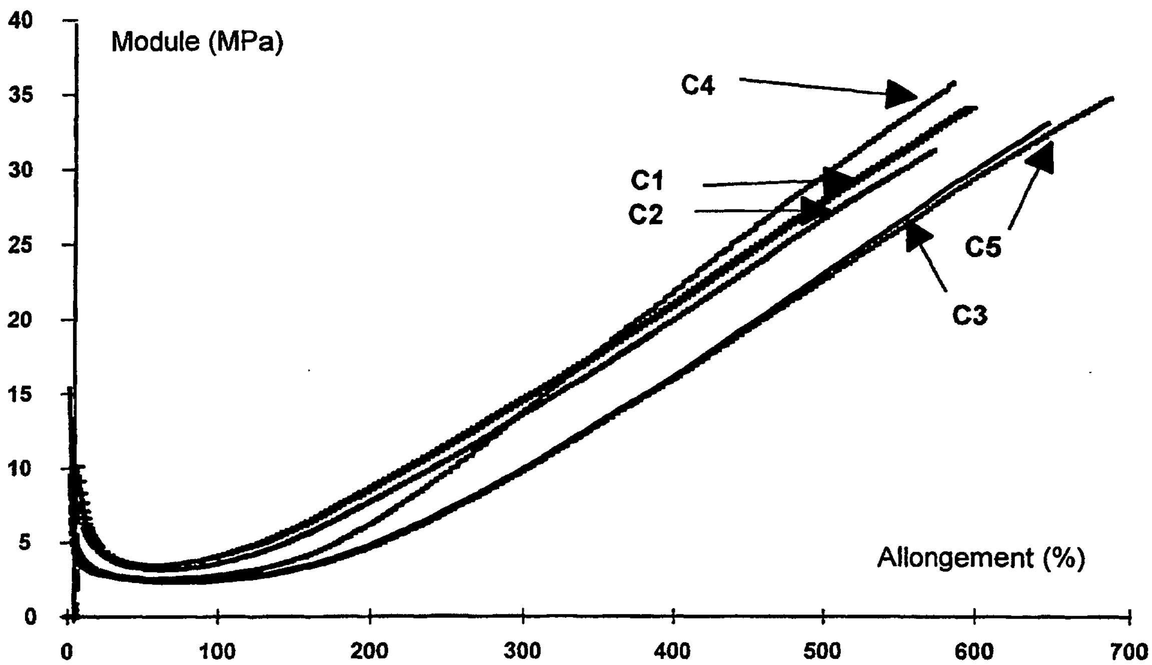
40
35
30
25
20
15
10
5
0
Module (MPa)
C4
C1
C2
C5
C3
Allongement (%)
0
100
200
300
400
500
600
700

Figure 2

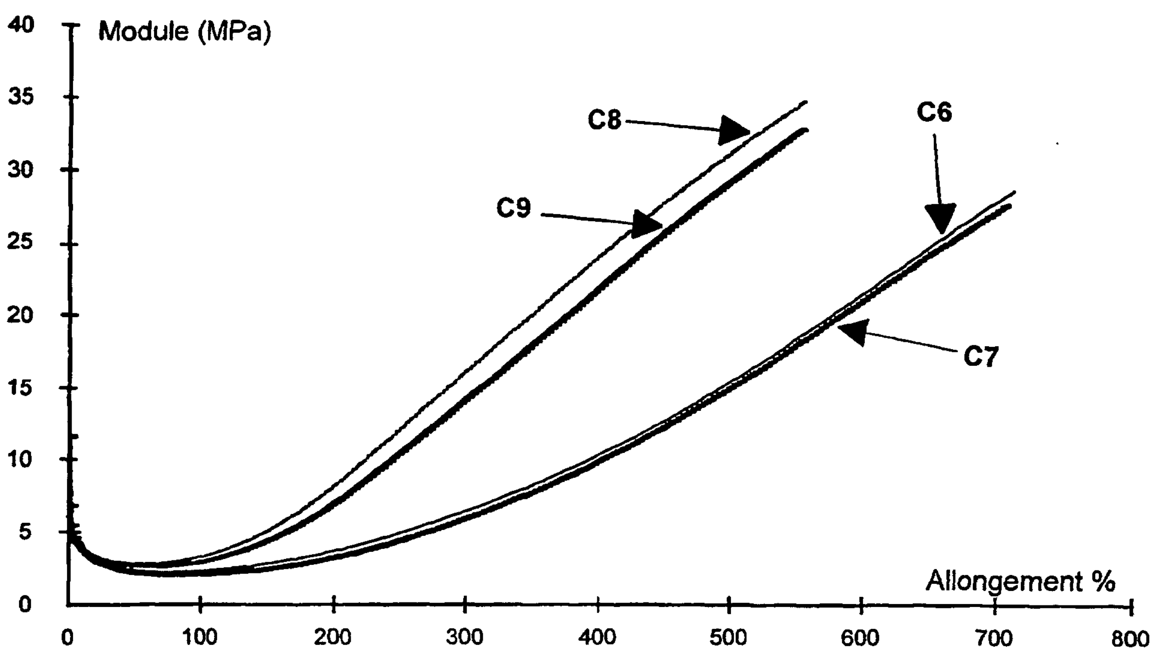
Module (MPa)
40
35
30
25
20
15
10
5
0
C8
C9
C6
C7
Allongement %
0
100
200
300
400
500
600
700
800

Figure 3

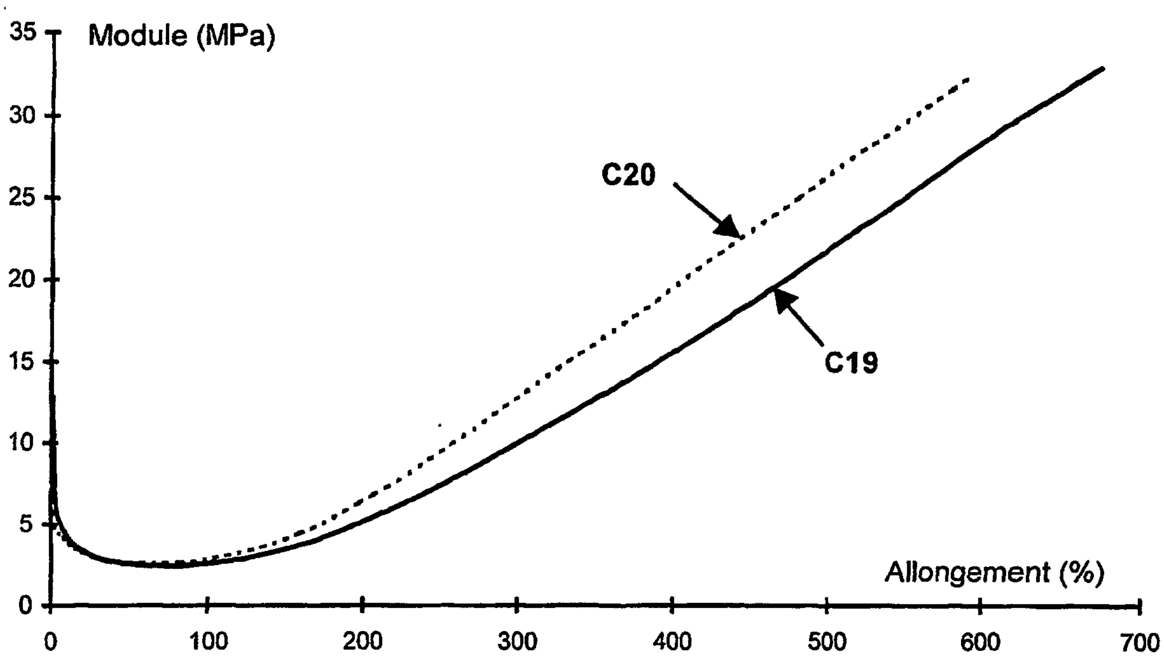
Module (MPa)
35
30
25
20
15
10
5
0
C20
C19
Allongement (%)
0
100
200
300
400
500
600
700